# EUROPEAN PATENT SPECIFICATION

(11) **EP 3 788 667 B1**
(45) Date of publication and mention of the grant of the patent: **12.02.2025**
(21) Application number: 19722077.5
(22) Date of filing: 02.05.2019
(51) Int. Cl.: H01M 4/505, H01M 4/525, H01M 10/0567, H01M 10/0568, H01M 10/0569

(54) **A LITHIUM COBALT OXIDE SECONDARY BATTERY COMPRISING A FLUORINATED ELECTROLYTE AND A POSITIVE ELECTRODE MATERIAL FOR HIGH VOLTAGE APPLICATIONS**
LITHIUM-KOBALTOXID-SEKUNDÄRBATTERIE MIT EINEM FLUORIERTEN ELEKTROLYTEN UND EINEM POSITIVELEKTRODENMATERIAL FÜR HOCHSPANNUNGSANWENDUNGEN
BATTERIE SECONDAIRE AU LITHIUM-OXYDE DE COBALT COMPRENANT UN ÉLECTROLYTE FLUORÉ ET UN MATÉRIAU D'ÉLECTRODE POSITIVE POUR APPLICATIONS HAUTE TENSION

(30) Priority: 04.05.2018 EP 18170763
(43) Date of publication of application: 10.03.2021
(73) Proprietor: Umicore, 1000 Brussels (BE)
(72) Inventor: KIM, Jeong-Rae, Cheonan Chungcheongnam-do 330-200 (KR); LEE, Jong-Ju, Cheonan Chungcheongnam-do 330-200 (KR); BRIDEL, Jean-Sébastien, Cheonan Chungcheongnam-do 330-200 (KR); WON, Ji-Hye, 1120 Brussels (BE); CHOI, Moon-Hyung, Seoul 04194 (KR); OH, Mi-Soon, 1120 Brussels (BE); LEE, Hyuncheol, 1120 Brussels (BE); HOUGH, Lawrence Alan, 1120 Brussels (BE); KIM, Hae-Young, Cheonan Chungcheongnam-do 330-200 (KR)
(74) Representative: Umicore RDI Patent Department
(86) International application number: PCT/EP2019/061221
(87) International publication number: WO 2019/211366

(56) References cited:
- WO-A1-2015/179210
- CN-A- 107 482 211
- CAO JINGCHAO ET AL: "Synthesis of spherical LiCo0.9Ni0.05Mn0.05O2with Co0.9Ni0.05Mn0.05CO3precursor and its electrochemistry performance", JOURNAL OF ALLOYS AND COMPOUNDS, ELSEVIER SEQUOIA, LAUSANNE, CH, vol. 617, 22 August 2014 (2014-08-22), pages 800 - 806, XP029067581, ISSN: 0925-8388, DOI: 10.1016/J.JALLCOM.2014.08.108

## Description

### TECHNICAL FIELD AND BACKGROUND

This invention relates to a liquid electrolyte lithium cobalt oxide (LiCoO₂ or LCO) secondary battery cell for portable electronic devices (for instance: the mobile phones, the laptop computers, and the cameras) with improved electrochemical performances at high operating voltages (compared to conventional operating voltages).

In the framework of the present invention, a high operating voltage can be defined as a voltage of at least 4.4V (and preferably not more than 4.5V) whereas a conventional operating voltage is inferior to 4.4V.

The current increasing demand for smaller and lighter batteries; which are suitable for portable electronic devices and which show tremendous energy densities; led to intensive developments attempting to achieve batteries with higher capacities and which are able to operate at high operating voltages.

It is a matter of fact that the capacity of a battery for portable electronic devices has now reached a plateau.

Moreover, the operating voltage of commercial batteries suitable for portable electronic devices currently varies from 4.2V to maximum 4.4V. For very high-end portable electronic devices such as leading-edge mobile phones, batteries applying operating voltages of at least 4.4V (and preferably not more than 4.5V) are requested.

Presently, there is therefore a need to achieve batteries having excellent capacities and good cycle life at high operating voltages.

However, exploring operating voltage spaces above 4.4V is currently challenging for LCO-based batteries due to two main critical issues which are:
i) Firstly, the degradation of LCO-based positive electrode material which takes place at an operating voltage above 4.4V. Indeed, during the charge of a LCO-based secondary battery, lithium ions (Li) move from a positive electrode to an anode electrode, the state of charge increases - which induces a voltage increase - and less Li remains in the layered LiCoO₂ structure of the LCO material. The layered structure finally collapses and cobalt (Co) dissolves in the electrolyte. This phenomenon is also called "Co dissolution" (or "metal dissolution"). The dissolution of Co is critical for the electrochemical property because it is directly linked to loss of a fraction of the active positive electrode material; and
ii) Secondly, the electrolyte may decompose at operating voltages superior to 4.4V, resulting in undesirable by-products which deteriorate the electrochemical properties of the battery and therefore its stability. Particularly, the decomposition of the electrolyte is induced by its oxidation which generates gases. The gas generation induces a swelling of the battery (also called "bulging"), which is an issue because it leads to a dislocation of components (e.g. anode + separator + cathode) of the battery. For instance, the contact between a negative electrode and a separator sheet; or the contact between a positive electrode and a separator sheet can be broken. In an extreme case, the battery can burst, which results in a safety issue.

A battery cell based on LCO and having an operating voltage above 4.4V and with a conventional electrolyte composition is disclosed in 'Jingchao Cao et al, Journal of Alloys and Compounds, vol 607 (2014), p.800-806'.

It is therefore an object of the present invention to provide a stable, safe, and high energy density battery which is advantageous in that the battery exhibits good cycle life (which can be for instance sufficient to high cycle life) at a higher voltage range versus conventional cut-off or operating voltages (i.e. at a voltage inferior to 4.4V).

This objective is achieved by providing a liquid electrolyte lithium secondary battery according to claim 1, which shows improved electrochemical properties in at a voltage of at least 4.4V (preferably not higher than 4.5V).

### SUMMARY OF THE INVENTION

The present invention concerns the following embodiments:

### Embodiment 1

In a first aspect, the present invention concerns a liquid electrolyte lithium secondary battery cell as defined in claim 1.

The powderous positive active material may have a layered crystal structure (hexagonal α-NaFeO₂ type structure or R-3m structure) where layers of lithium ions are located between slabs of CoOs octahedron.

In this 1^{st} embodiment the powderous positive active material may comprise particles having a core and a surface layer thereon, said surface layer having a Mn concentration that is higher than in the core of said particles;

In a preferred embodiment, the surface layer of said particles comprises at least 1 mol% of Mn, optionally at least 2 mol% of Mn, preferably at least 4 mol% of Mn, more preferably at least 5 mol% of Mn.

Preferably, the Mn concentration in the surface layer of the powderous positive active material is higher than the overall Mn concentration.

The overall Mn concentration is measured for the entire powderous active material: core + surface layer.

In the framework of the present invention, there has been established a synergy between the following components: i) the positive electrode material and ii) the electrolyte composition, allowing achieving an unexpected and considerable improvement of both the energy density and the safety of a liquid electrolyte-based battery.

Indeed, it has been observed that an increase of i) the upper cut-off voltage and of ii) the electrochemical stability window of the electrolyte composition could be achieved by a combination, in a secondary battery cell, of an optimized electrolyte composition with an appropriate positive electrode material composition, thereby allowing to reach operating voltage values that are superior or equal to 4.4 V and preferably inferior or equal to 4.5V, leading to an enhancement of both the energy density and the safety of the battery.

Therefore, the LCO-based positive electrode material is suitable for high operating voltages lithium secondary batteries of portable electronic devices.

According to the present invention, a good cycle life may mean that the battery shows a relative discharge capacity of at least 90% over at least 500 cycles, measured at a temperature superior or equal to 25°C and at an operating voltage of at least 4.4 V.

A safe battery according to present invention may be a battery presenting a relative thickness change (or bulging) of maximum 30% when stored at a temperature superior or equal to 90°C for 4 hours. Preferably, a safe battery according to present invention may be characterized by a DCR growth at an operating voltage superior or equal to 4.4V of maximum 20% at 45°C when cycled over at least 500 cycles.

A stable battery according to the present invention may be a battery having a retained capacity of at least 60% measured at a temperature superior or equal to 60°C. Preferably, a stable battery according to the present invention may have a recovered capacity of at least 80% measured at a temperature superior or equal to 60°C.

The term "electrolyte composition" as used herein, refers to a chemical composition suitable for use as an electrolyte in an electrochemical cell, especially a liquid electrolyte lithium secondary battery cell that has an operating voltage superior or equal to 4.4V and preferably inferior or equal to 4.5V.

The term "electrolyte salt" as used herein, refers to an ionic salt that is at least partially soluble in the electrolyte composition and that at least partially dissociates into ions in the electrolyte composition to form a conductive electrolyte composition.

The term "cyclic carbonate" as used herein refers specifically to an organic carbonate, wherein the organic carbonate is a dialkyl diester derivative of carbonic acid, the organic carbonate having a general formula R'OC(O)OR", wherein R' and R" form a cyclic structure via interconnected atoms and are each independently selected from alkyl groups having at least one carbon atom, wherein R' and R" can be the same or different, branched or unbranched, saturated or unsaturated, substituted or unsubstituted.

Particular examples of branched or unbranched alkyl groups that can be used in accordance with the invention include methyl, ethyl, n-propyl, isopropyl, n-butyl, isobutyl, tert-butyl.

The term "fluorinated acyclic carboxylic acid ester" refers to a dialkyl carboxylic acid ester wherein the alkyl groups do not form a cyclic structure via interconnected atoms and wherein at least one hydrogen atom in the structure is substituted by fluorine. The alkyl groups are independently selected from alkyl groups having at least one carbon atom, they can be the same or different, branched or unbranched, saturated or unsaturated.

More generally, the term "fluorinated" in connection with any organic compound mentioned hereinafter means that at least one hydrogen is replaced by fluorine. The term "fluoroalkyl, fluoroalkenyl and fluoroalkynyl groups" refers to alkyl, alkenyl and alkynyl groups wherein at least one hydrogen is replaced by fluorine respectively.

The term "lithium phosphate compound" refers to a compound having both lithium and a phosphate group in the empirical formula. The lithium and phosphate group are not necessarily bonded directly to one another, but are present in the same compound.

The term "lithium boron compound" refers to a compound having both lithium and boron, preferably borate group, in the empirical formula. The lithium and boron or borate group are not necessarily bonded directly to one another, but are present in the same compound.

The term "lithium sulfonate compound" refers to a compound having both lithium and a sulfonate group in the empirical formula. The lithium and sulfonate group are not necessarily bonded directly to one another, but are present in the same compound.

The term "cyclic sulfur compound" commonly refers to an organic cyclic sulfate or sultone, being a dialkyl (di)ester derivative of sulphuric acid or sulfonic acid, wherein the alkyl groups form a cyclic structure via interconnected atoms and are each independently selected from alkyl groups having at least one carbon atom, that can be the same or different, branched or unbranched, saturated or unsaturated, substituted or unsubstituted.

The term "cyclic carboxylic acid anhydride" refers to an organic compound derived from a carboxylic acid wherein two acyl groups are bonded to an oxygen atom according to the general formula RₑC(O)-O-C(O)R_{f} and wherein Rₑ and R_{f} form a cyclic structure via interconnected atoms and are each independently selected from alkyl groups having at least one carbon atom, wherein Rₑ and R_{f} can be the same or different, branched or unbranched, saturated or unsaturated, substituted or unsubstituted.

In the following description, the expression "ranging from...to..." should be understood has including the limits.

### Embodiment 2

The electrolyte composition comprises at least one non-fluorinated cyclic carbonate and at least one fluorinated cyclic carbonate.

In a second embodiment according to **Embodiment 1,** a fluorinated or non-fluorinated cyclic carbonate may be represented by one of the formulas (I) or (II): 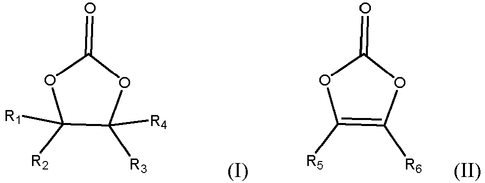 wherein R₁ to R₆, which may be the same or different, are independently selected from hydrogen, fluorine, a C1 to C8 alkyl group, a C2 to C8 alkenyl group, a C2 to C8 alkynyl group, a C2 to C8 fluoroalkyl group, a C2 to C8 fluoroalkenyl group, or a C2 to C8 fluoroalkynyl group.

Preferably, R₁ to R₆ are independently selected from hydrogen, fluorine, a C1 to C3 alkyl group, a C2 to C3 alkenyl group, a C2 to C3 alkynyl group, a C1 to C3 fluoroalkyl group, a C2 to C3 fluoroalkenyl group, or a C2 to C3 fluoroalkynyl group.

More preferably, R₁ and R₅ are independently selected from fluorine or a C1 to C3 alkyl group, said C1 to C3 alkyl group being preferably a methyl group, and R₂, R₃, R₄, R₆, are as defined above.

Even more preferably, R₁ and R₅ are independently selected from fluorine or a methyl group and R₂, R₃, R₄, R₆ are respectively hydrogen.

### Embodiment 3

In a third embodiment, preferably according to **Embodiment 2,** the non-fluorinated cyclic carbonate can be of the above formula (I) or (II) wherein, R1 to R6, which may be the same or different, are independently selected from hydrogen, a C1 to C8 alkyl group, a C2 to C8 alkenyl group, or a C2 to C8 alkynyl group.

Preferably, when the electrolyte composition comprises a non-fluorinated cyclic carbonate of formula (I) or (II), R1 to R6 are independently selected from hydrogen, a C1 to C3 alkyl group, a C2 to C3 alkenyl group, or a C2 to C3 alkynyl group.

More preferably, when the electrolyte composition comprises a non-fluorinated cyclic carbonate of formula (I) or (II), R1 and R5 are independently selected from hydrogen or a C1 to C3 alkyl group, said C1 to C3 alkyl group being preferably a methyl group, and R2, R3, R4, R6 are independently selected from hydrogen, a C1 to C3 alkyl group or a vinyl group.

Even more preferably, when the electrolyte composition comprises a non-fluorinated cyclic carbonate of formula (I) or (II), R1 and R5 are independently a methyl group and R2, R3, R4, R6 are respectively hydrogen.

In a preferred sub-embodiment, said non-fluorinated cyclic carbonate is a non-fluorinated cyclic carbonate of formula (I) as defined above.

In another preferred sub-embodiment, the electrolyte composition comprises at least two cyclic carbonates, preferably both of formula (I), at least one of the two being a non-fluorinated cyclic carbonate as defined above.

### Embodiment 4

In a fourth embodiment, preferably according to **Embodiment 3,** said non-fluorinated cyclic carbonate selected from ethylene carbonate, propylene carbonate, vinylene carbonate, ethyl propyl vinylene carbonate, vinyl ethylene carbonate, dimethylvinylene carbonate, and mixtures thereof.

More preferably, it is selected from ethylene carbonate, propylene carbonate, vinyl ethylene carbonate, and mixtures thereof.

Propylene carbonate is particularly preferred.

Non-fluorinated cyclic carbonates are commercially available (e.g. from Sigma-Aldrich) or can be prepared using methods known in the art. It is desirable to purify the non-fluorinated cyclic carbonate to a purity level of at least about 99.0%, for example at least about 99.9%. Purification can be done using methods known in the art. For example, propylene carbonate can be synthesized with a high purity according to the method described in US5437775.

### Embodiment 5

In a fifth embodiment, preferably according to any of the **Embodiments 1 to 4,** said non-fluorinated cyclic carbonate is present in the electrolyte composition in an amount ranging from 5%, preferably from 10%, more preferably from 12%, more preferably from 15%, to a maximum amount of 17%, by weight relative to the total weight of the electrolyte composition.

### Embodiment 6

In a sixth embodiment, preferably according to any of the **Embodiments 1 to 5,** the fluorinated cyclic carbonate can be of the above formula (I) or (II), wherein at least one of R1 to R6 is fluorine, a C1 to C8 fluoroalkyl group, a C2 to C8 fluoroalkenyl group, or a C2 to C8 fluoroalkynyl group.

Preferably, when the electrolyte composition comprises a fluorinated cyclic carbonate of formula (I) or (II), at least one of R1 to R6 is fluorine, a C1 to C3 fluoroalkyl group, a C2 to C3 fluoroalkenyl group, or a C2 to C3 fluoroalkynyl group.

More preferably, when the electrolyte composition comprises a fluorinated cyclic carbonate of formula (I) or (II), R1 and R5 are independently fluorine and R2, R3, R4, R6 are independently selected from hydrogen, fluorine or a C1 to C3 alkyl group being preferably a methyl group. Even more preferably, when the electrolyte composition comprises a fluorinated cyclic carbonate of formula (I) or (II), R1 and R5 are independently fluorine and R2, R3, R4, R6 are respectively hydrogen.

In a preferred sub-embodiment, said fluorinated cyclic carbonate is a fluorinated cyclic carbonate of formula (I) as defined above.

### Embodiment 7

In a seventh embodiment, preferably according to any of the **Embodiments 1 to 6,** the fluorinated cyclic carbonate can be especially selected from 4-fluoro-1,3-dioxolan-2-one; 4-fluoro-4-methyl-1,3-dioxolan-2-one; 4-fluoro-5-methyl-1,3-dioxolan-2-one; 4-fluoro-4,5-dimethyl-1,3-dioxolan-2-one; 4,5-difluoro-1,3-dioxolan-2-one; 4,5-difluoro-4-methyl-1,3-dioxolan-2-one; 4,5-difluoro-4,5-dimethyl-1,3-dioxolan-2-one; 4,4-difluoro-1,3-dioxolan-2-one; 4,4,5-trifluoro-1,3-dioxolan-2-one; 4,4,5,5-tetrafluoro-1,3-dioxolan-2-one; and mixtures thereof; 4-fluoro-1,3-dioxolan-2-one is particularly preferred.

Fluorinated cyclic carbonates are commercially available (4-fluoro-1,3-dioxolan-2-one especially can be obtained from Solvay) or can be prepared using methods known in the art, for instance such as described in WO2014056936. It is desirable to purify the fluorinated cyclic carbonate to a purity level of at least about 99.0%, for example at least about 99.9%. Purification can be done using methods known in the art.

### Embodiment 8

In an eight embodiment, preferably according to any of the **Embodiments 1 to 7,** The composition comprises at least two cyclic carbonates. At least one is a non-fluorinated cyclic carbonate and at least one is a fluorinated cyclic carbonate as described above.

The fluorinated cyclic carbonate is present in the electrolyte composition in an amount ranging from 0.5% to 10%, preferably from 0.8% to 10%, more preferably from 1% to 10%, more preferably from 2% to 10%, even more preferably from 3% to 10%, by weight relative to the total weight of the electrolyte composition.

### Embodiment 9

In a ninth embodiment, preferably according to any of the **Embodiments 1 to 8,** the electrolyte composition also comprises at least a fluorinated acyclic carboxylic acid ester. Said fluorinated acyclic carboxylic acid ester is of formula:

R¹-COO-R²

wherein
i) R¹ is hydrogen, an alkyl group or a fluoroalkyl group;
ii) R² is an alkyl group or a fluoroalkyl group;
iii) either or both of R¹ and R² comprises fluorine; and
iv) R¹ and R², taken as a pair, comprise at least two carbon atoms but not more than seven carbon atoms.

In a sub-embodiment, R¹ and R² are as defined herein above, and R¹ and R², taken as a pair, comprise at least two carbon atoms but not more than seven carbon atoms and further comprise at least two fluorine atoms, with the proviso that neither R¹ nor R² contains a FCH2-group or a -FCH- group.

In a sub-embodiment, R¹ is hydrogen and R² is a fluoroalkyl group.

In a sub-embodiment, R¹ is an alkyl group and R² is a fluoroalkyl group.

In a sub-embodiment, R¹ is a fluoroalkyl group and R² is an alkyl group.

In a sub-embodiment, R¹ is a fluoroalkyl group and R² is a fluoroalkyl group, and R¹ and R² can be either the same as or different from each other.

Preferably, the number of carbon atoms in R¹ in the formula above is 1 to 5, preferably 1 to 3, still preferably 1 or 2, even more preferably 1.

Preferably, the number of carbon atoms in R² in the formula above is 1 to 5, preferably 1 to 3, still preferably 2.

Preferaby, R¹ is hydrogen, a C1 to C3 alkyl group or a C1 to C3 fluoroalkyl group, more preferably a C1 to C3 alkyl group and still preferably a methyl group.

Preferaby, R² is a C1 to C3 alkyl group or a C1 to C3 fluoroalkyl group, more preferably a C1 to C3 fluoroalkyl group and still preferably a C1 to C3 fluoroalkyl group comprising at least two fluorine atoms.

Preferably, neither R¹ nor R² contain a FCH2- group or a -FCH- group.

### Embodiment 10

In a tenth embodiment, preferably according to **Embodiment 1 to 9,**
said fluorinated acyclic carboxylic acid ester is selected from the group consisting of 2,2-difluoroethyl acetate, 2,2,2-trifluoroethyl acetate, 2,2-difluoroethyl propionate, 3,3-difluoropropyl acetate, 3,3-difluoropropyl propionate, methyl 3,3-difluoropropanoate, ethyl 3,3-difluoropropanoate, ethyl 4,4-difluorobutanoate, difluoroethyl formate, trifluoroethyl formate, and mixtures thereof, preferably selected from the group consisting of 2,2-difluoroethyl acetate, 2,2-difluoroethyl propionate, 2,2,2-trifluoroethyl acetate, 2,2-difluoroethyl formate and mixtures thereof; being preferably 2,2-difluoroethyl acetate.

Fluorinated acyclic carboxylic acid esters can be purchased from a specialty chemical company or prepared using methods known in the art. For example, 2,2-difluoroethyl acetate can be prepared from acetyl chloride and 2,2-difluoroethanol, with or without a basic catalyst. Additionally, 2,2-difluoroethyl acetate and 2,2-difluoroethyl propionate may be prepared using the method described by Wiesenhofer et al. in WO2009/040367, Example 5. Other fluorinated acyclic carboxylic acid esters may be prepared using the same method using different starting carboxylate salts. Alternatively, some of these fluorinated solvents may be purchased from companies such as Matrix Scientific (Columbia SC).

It is desirable to purify the fluorinated acyclic carboxylic acid ester to a purity level of at least about 99.0%, for example at least about 99.9%. Purification can be done using methods known in the art, in particular distillation methods such as vacuum distillation or spinning band distillation.

### Embodiment 11

In an eleventh embodiment, preferably according to any of the **Embodiments 1 to 10,** the fluorinated acyclic carboxylic acid ester is present in the electrolyte composition in an amount ranging from a minimum amount of 70%, to a maximum amount of 95%, preferably to a maximum amount of 80%, more preferably to a maximum amount of 75%, by weight relative to the total weight of the electrolyte composition.

### Embodiment 12

In a twelfth embodiment, preferably according to any of the **Embodiments 1 to 11,** the electrolyte salt is a lithium salt.

Suitable electrolyte salts include without limitation lithium hexafluorophosphate (LiPF₆), lithium bis(trifluromethyl)tetrafluorophosphate (LiPF₄(CF₃)₂), lithium bis(pentafluoroethyl)tetrafluorophosphate (LiPF₄(C₂F₅)₂), lithium tris(pentafluoroethyl)trifluorophosphate (LiPF₃(C₂F₅)₃), lithium bis(trifluoromethanesulfonyl)imide (LiN(CF₃SO₂)₂), lithium bis(perfluoroethanesulfonyl)imide LiN(C₂F₅SO₂)₂, LiN(C₂F₅SO₃)₂, lithium (fluorosulfonyl) (nonafluorobutanesulfonyl)imide, lithium bis(fluorosulfonyl)imide, lithium tetrafluoroborate, lithium perchlorate, lithium hexafluoroarsenate, lithium hexafluoroantimonate, lithium tetrachloroaluminate, lithium aluminate (LiAlO4), lithium trifluoromethanesulfonate, lithium nonafluorobutanesulfonate, lithium tris(trifluoromethanesulfonyl)methide, lithium bis(oxalato)borate, lithium difluoro(oxalato)borate, Li₂B₁₂F₁₂₋ₓHₓ where x is an integer equal to 0 to 8, and mixtures of lithium fluoride and anion receptors such as B(OC₆F₅)₃.

Mixtures of two or more of these or comparable electrolyte salts may also be used.

The electrolyte salt is preferably selected from lithium hexafluorophosphate, lithium bis(fluorosulfonyl)imide, lithium bis(trifluoromethanesulfonyl)imide and mixtures thereof, more preferably from lithium hexafluorophosphate, lithium bis(fluorosulfonyl)imide and mixtures thereof. The electrolyte salt is most preferably lithium hexafluorophosphate.

The electrolyte salt is usually present in the electrolyte composition in an amount ranging from 5% to 20%, preferably from 6% to 18%, more preferably from 8% to 17%, more preferably from 9% to 16%, even more preferably from 11% to 16%, in weight relative to the total amount of electrolyte composition.

Electrolyte salts are commercially available (they can be purchased from a specialty chemical company such as Sigma-Aldrich or Solvay for lithium bis(trifluoromethanesulfonyl)imide) or can be prepared using methods known in the art. LiPF6 can for instance be manufactured according to the method described in US5866093. Sulfonylimides salts can be for instance manufactured as described in US5072040. It is desirable to purify the electrolyte salt to a purity level of at least about 99.0%, for example at least about 99.9%. Purification can be done using methods known in the art.

### Embodiment 13

In a thirtieth embodiment, preferably according to any of the **Embodiments 1 to 12,** the electrolyte composition further comprises at least one additional lithium compound selected from lithium boron compounds.

Said lithium compound is selected from lithium boron compounds, eventually from lithium oxalto borates in particular. It can advantageously be selected from lithium bis(oxalato)borate, lithium difluoro(oxalato)borate, lithium tetrafluoroborate, Li₂B₁₂F₁₂₋ₓHₓ wherein x is an integer ranging from 0 to 8, and mixtures thereof; more specifically, said lithium compound can be selected from lithium bis(oxalato)borate, lithium difluoro (oxalato)borate, lithium tetrafluoroborate, and mixtures thereof; in one embodiment, said lithium compound is lithium bis (oxalato)borate.

Optionally, the electrolyte composition may further comprise at least one additional lithium compound selected from lithium phosphates compounds, lithium sulfonates compounds, and mixtures thereof.

According to one embodiment, said lithium compound is selected from lithium phosphates compounds. It can advantageously be selected from lithium monofluorophosphate, lithium difluorophosphate, lithium trifluoromethane phosphate, lithium tetrafluoro phosphate, lithium difluorobis(oxalato)phosphate, lithium tetrafluoro(oxalato)phosphate, lithium tris(oxalato)phosphate and mixtures thereof;

According to a sub-embodiment, said lithium compound is selected from fluorinated lithium phosphates compounds. It can especially be selected from lithium monofluorophosphate, lithium difluorophosphate, lithium trifluoromethane phosphate, lithium tetrafluoro phosphate and mixtures thereof; in one embodiment, said lithium compound is lithium difluorophosphate.

According to another sub-embodiment, said lithium compound is selected from lithium oxalato phosphates compounds, eventually from fluorinated oxalato phosphates compounds in particular. It can especially be selected from lithium difluorobis(oxalato)phosphate, lithium tetrafluoro(oxalato)phosphate, lithium tris(oxalato)phosphate and mixtures thereof; more specifically, it can be selected from difluorobis(oxalato)phosphate, lithium tetrafluoro(oxalato)phosphate or mixtures thereof.

According to one embodiment, said lithium compound is selected from lithium sulfonates. It can advantageously be selected from lithium fluorosulfonate, lithium trifluoromethanesulfonate or mixtures thereof.

According to a particular embodiment, said lithium compound is selected from lithium difluorophosphate, lithium bis(oxalato)borate and mixtures thereof.

Lithium compounds are commercially available (they can be purchased from a specialty chemical company such as Sigma-Aldrich) or can be prepared using methods known in the art. Lithium bis (oxalato)borate can be, for instance, synthesized as described in DE19829030. Lithium difluorophosphate can be for instance synthesized such as described in US8889091. It is desirable to purify the lithium compound to a purity level of at least about 99.0%, for example at least about 99.9%. Purification can be done using methods known in the art.

### Embodiment 14

In a fourteenth embodiment, preferably according to any of the **Embodiments 1 to 13,** said lithium boron compound is present in the electrolyte composition in an amount ranging from 0.1% to 5%, preferably from 0.2% to 4%, more preferably from 0.3% to 3%, more preferably from 0.4% to 2%, even more preferably from 0.5% to 1%, in weight relative to the total amount of electrolyte composition.

### Embodiment 15

In a fifteenth embodiment, preferably according to any of the **Embodiments 1 to 14,** the cyclic sulfur compound is represented by the formula: 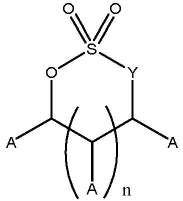 wherein Y is oxygen or denotes a HCA group; wherein each A is independently hydrogen or an optionally fluorinated ethenyl (H₂C=CH-), allyl (H₂C=CH-CH₂-), ethynyl (HC≡C-), propargyl (HC≡C-CH₂-), or C₁-C₃ alkyl group; and n is 0 or 1.

The HCA group denotes a carbon atom that is linked to a hydrogen atom, an A entity as defined above, and the adjacent sulfur and carbon atoms of the cyclic sulfur compound.

Each A may be unsubstituted or partially or totally fluorinated. Preferably, A is unsubstituted. More preferably, A is hydrogen or a C₁-C₃ alkyl group. Still more preferably, A is hydrogen.

In a sub-embodiment, Y is oxygen.

In a sub-embodiment, Y is CH₂.

In a sub-embodiment n is 0.

In a sub-embodiment n is 1.

Mixtures of two or more of sulfur compounds may also be used.

### Embodiment 16

In a sixteenth embodiment, preferably according to any of the **Embodiments 1 to 15,** the cyclic sulfur compound is selected from 1,3,2-dioxathiolane-2,2-dioxide, 1,3,2-dioxathiolane-4-ethynyl-2,2-dioxide, 1,3,2-dioxathiolane-4-ethenyl-2,2-dioxide, 1,3,2-dioxathiolane-4,5-diethenyl-2,2-dioxide, 1,3,2-dioxathiolane-4-methyl-2,2-dioxide, 1,3,2-dioxathiolane-4,5-dimethyl-2,2-dioxide; 1,3,2-dioxathiane-2,2-dioxide, 1,3,2-dioxathiane-4-ethynyl-2,2-dioxide, 1,3,2-dioxathiane-5-ethynyl-2,2-dioxide, 1,3,2-dioxathiane-4-ethenyl-2,2-dioxide, 1,3,2-dioxathiane-5-ethenyl-2,2-dioxide, 1,3,2-dioxathiane-4,5-diethenyl-2,2-dioxide, 1,3,2-dioxathiane-4,6-diethenyl-2,2-dioxide, 1,3,2-dioxathiane-4,5,6-triethenyl-2,2-dioxide, 1,3,2-dioxathiane-4-methyl-2,2-dioxide, 1,3,2-dioxathiane-5-methyl-2,2-dioxide, 1,3,2-dioxathiane-4,5-dimethyl-2,2-dioxide, dioxathiane-4,6-dimethyl-2,2-dioxide, dioxathiane-4,5,6-trimethyl-2,2-dioxide; 1,3-propane sultone, 3-fluoro-1,3-propane sultone, 4-fluoro-1,3-propane sultone, 5-fluoro-1,3-propane sultone, 1,4-butane sultone, 3-fluoro-1,4-butane sultone, 4-fluoro-1,4-butane sultone, 5-fluoro-1,4-butane sultone, 6-fluoro-1,4-butane sultone and mixtures thereof.

In a first sub-embodiment, the cyclic sulfur compound is a cyclic sulfate selected from 1,3,2-dioxathiolane-2,2-dioxide, 1,3,2-dioxathiolane-4-ethynyl-2,2-dioxide, 1,3,2-dioxathiolane-4-ethenyl-2,2-dioxide, 1,3,2-dioxathiolane-4,5-diethenyl-2,2-dioxide, 1,3,2-dioxathiolane-4-methyl-2,2-dioxide, 1,3,2-dioxathiolane-4,5-dimethyl-2,2-dioxide; 1,3,2-dioxathiane-2,2-dioxide, 1,3,2-dioxathiane-4-ethynyl-2,2-dioxide, 1,3,2-dioxathiane-5-ethynyl-2,2-dioxide, 1,3,2-dioxathiane-4-ethenyl-2,2-dioxide, 1,3,2-dioxathiane-5-ethenyl-2,2-dioxide, 1,3,2-dioxathiane-4,5-diethenyl-2,2-dioxide, 1,3,2-dioxathiane-4,6-diethenyl-2,2-dioxide, 1,3,2-dioxathiane-4,5,6-triethenyl-2,2-dioxide, 1,3,2-dioxathiane-4-methyl-2,2-dioxide, 1,3,2-dioxathiane-5-methyl-2,2-dioxide, 1,3,2-dioxathiane-4,5-dimethyl-2,2-dioxide, dioxathiane-4,6-dimethyl-2,2-dioxide, dioxathiane-4,5,6-trimethyl-2,2-dioxide; and mixtures thereof;

More particularly, the cyclic sulfate can be selected from 1,3,2-dioxathiolane-2,2-dioxide, 1,3,2-dioxathiolane-4-ethynyl-2,2-dioxide, 1,3,2-dioxathiolane-4-ethenyl-2,2-dioxide, 1,3,2-dioxathiolane-4,5-diethenyl-2,2-dioxide, 1,3,2-dioxathiolane-4-methyl-2,2-dioxide, 1,3,2-dioxathiolane-4,5-dimethyl-2,2-dioxide; and mixtures thereof; being preferably 1,3,2-dioxathiolane-2,2-dioxide.

Alternatively, the cyclic sulfate can be selected from 1,3,2-dioxathiane-2,2-dioxide, 1,3,2-dioxathiane-4-ethynyl-2,2-dioxide, 1,3,2-dioxathiane-5-ethynyl-2,2-dioxide, 1,3,2-dioxathiane-4-ethenyl-2,2-dioxide, 1,3,2-dioxathiane-5-ethenyl-2,2-dioxide, 1,3,2-dioxathiane-4,5-diethenyl-2,2-dioxide, 1,3,2-dioxathiane-4,6-diethenyl-2,2-dioxide, 1,3,2-dioxathiane-4,5,6-triethenyl-2,2-dioxide, 1,3,2-dioxathiane-4-methyl-2,2-dioxide, 1,3,2-dioxathiane-5-methyl-2,2-dioxide, 1,3,2-dioxathiane-4,5-dimethyl-2,2-dioxide, dioxathiane-4,6-dimethyl-2,2-dioxide, dioxathiane-4,5,6-trimethyl-2,2-dioxide; and mixtures thereof; being preferably 1,3,2-dioxathiane-2,2-dioxide.

In a second sub-embodiment, the cyclic sulfur compound is a sultone selected from 1,3-propane sultone, 3-fluoro-1,3-propane sultone, 4-fluoro-1,3-propane sultone, 5-fluoro-1,3-propane sultone, 1,4-butane sultone, 3-fluoro-1,4-butane sultone, 4-fluoro-1,4-butane sultone, 5-fluoro-1,4-butane sultone, 6-fluoro-1,4-butane sultone and mixtures thereof.

More particularly, the sultone can be selected from 1,3-propane sultone, 3-fluoro-1,3-propane sultone, 4-fluoro-1,3-propane sultone, 5-fluoro-1,3-propane sultone and mixtures thereof; preferably from 1,3-propane sultone and/or 3-fluoro-1,3-propane sultone; being more preferably 1,3-propane sultone.

Alternatively, the sultone can be selected from 1,4-butane sultone, 3-fluoro-1,4-butane sultone, 4-fluoro-1,4-butane sultone, 5-fluoro-1,4-butane sultone, 6-fluoro-1,4-butane sultone and mixtures thereof; preferably from 1,4-butane sultone and/or 3-fluoro-1,4-butane sultone; being more preferably 1,4-butane sultone.

Cyclic sulfur compounds are commercially available (for instance they can be purchased from a specialty chemical company such as Sigma-Aldrich) or prepared using methods known in the art. It is desirable to purify the cyclic sulfur compound to a purity level of at least about 99.0%, for example at least about 99.9%. Purification can be done using methods known in the art.

### Embodiment 17

In a seventeenth embodiment, preferably according to any of the **Embodiments 1 to 16,** the cyclic sulfur compound is present in the electrolyte composition in an amount ranging from 0.2% to 10%, preferably from 0.3% to 7%, more preferably from 0.4% to 5%, more preferably from 0.5% to 3%, in weight relative to the total amount of electrolyte composition.

### Embodiment 18

In an eighteenth embodiment, preferably according to any of the **Embodiments 1 to 17,** the electrolyte composition can advantageously comprise a cyclic carboxylic acid anhydride.

In a sub-embodiment, the cyclic carboxylic acid anhydride is represented by one of the formulas (IV) through (XI): 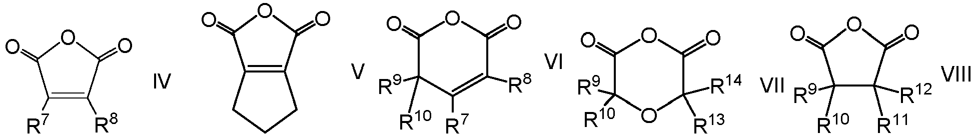 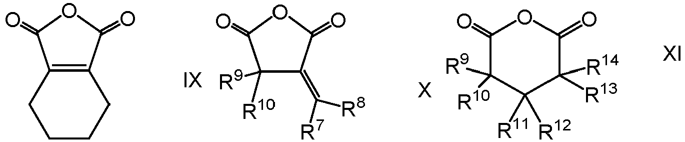 wherein R⁷ to R¹⁴ is each independently hydrogen, fluorine, a linear or branched C₁ to C₁₀ alkyl group optionally substituted with fluorine, an alkoxy, and/or a thioalkyl group, a linear or branched C₂ to C₁₀ alkenyl group, or a C₆ to C₁₀ aryl group.

The alkoxy group can have from one to ten carbons and can be linear or branched; examples of alkoxy groups include - OCH3, -OCH2CH3 and-OCH2CH2CH3.

The thioalkyl group can have from one to ten carbons and can be linear or branched; examples of thioalkyl substituents include - SCH3, -SCH2CH3, and -SCH2CH2CH3.

In a sub-embodiment, R⁷ to R¹⁴ is each independently hydrogen, fluorine or a C₁ to C₃ alkyl group, being preferably hydrogen.

In a sub-embodiment, said at least one cyclic carboxylic acid anhydride is of formula (IV) above.

### Embodiment 19

In a nineteenth embodiment, preferably according to any of the **Embodiments 1 to 18,** said at least one cyclic carboxylic acid anhydride can be selected from maleic anhydride; succinic anhydride; glutaric anhydride; 2,3-dimethylmaleic anhydride; citraconic anhydride; 1-cyclopentene-1,2-dicarboxylic anhydride; 2,3-diphenylmaleic anhydride; 3,4,5,6-tetrahydrophthalic anhydride; 2,3-dihydro-1,4-dithiiono-[2,3-c] furan-5,7-dione; phenylmaleic anhydride; and mixtures thereof.

Preferably, said at least one cyclic carboxylic acid anhydride is selected from maleic anhydride, succinic anhydride, glutaric anhydride, 2,3-dimethylmaleic anhydride, citraconic anhydride, or mixtures thereof.

Still preferably, said at least one cyclic carboxylic acid anhydride is maleic anhydride.

Cyclic carboxylic acid anhydrides can be purchased from a specialty chemical company (such as Sigma-Aldrich) or prepared using methods known in the art. For instance, maleic anhydride can be synthesized as described in US3907834. It is desirable to purify the cyclic carboxylic acid anhydride to a purity level of at least about 99.0%, for example at least about 99.9%. Purification can be done using methods known in the art.

### Embodiment 20

In a twentieth embodiment, preferably according to **Embodiment 1 to 19,** the cyclic carboxylic acid anhydride can be present in the electrolyte composition in an amount ranging from 0.10% to 5%, preferably from 0.15% to 4%, more preferably from 0.20% to 3%, more preferably from 0.25% to 1%, even more preferably from 0.30% to 0.80%, in weight relative to the total amount of electrolyte composition.

### Embodiment 21

In a 21th embodiment according to **Embodiment 1 to 20,** c≤0.02.

### Embodiment 22

In a 22^{th} embodiment according to any of the **Embodiments 1 to 21,**
-0.005≤x≤0.005.

### Embodiment 23

In a 23^{th} embodiment according to any of the **Embodiments 1 to 22,** c≥0.002.

### Embodiment 24

In a 24^{th} embodiment according to any of the **Embodiments 1 to 23,** 0.02≤a≤0.09.

In this **Embodiment 24,** the positive active material preferably has a Li:M molar ratio of 1.00 ± 0.01, with M including the following elements: Co, Ni, Mn, and M".

### Embodiment 25

In a 25^{th} embodiment according any of the **Embodiments 1 to 24,** the surface layer comprises Ni.

Preferably, the surface layer of the particles has a Ni concentration that is higher than in the core of said particles.

The content of Ni in the surface layer is of at least 1 mol%, preferably of at least 2 mol%, more preferably of at least 3 mol%, optionally of at least 4 mol%.

The surface layer comprises at least 5 mol% of Ni, preferably at least 6 mol% of Ni, more preferably at least 7 mol% of Ni, optionally at least 8 mol% of Ni or at least 9 mol% of Ni.

Preferably, the surface layer comprises Mn and Ni.

For any successive preferred amounts of Mn in the surface layer from the list!: ≥1, ≥2, ≥3, ≥4, ≥5 mol% of Mn, a preferred amount of Ni in the surface layer from the list2: ≥1, ≥2, ≥3, ≥4, ≥5, ≥6, ≥7, ≥8, ≥9 mol% of Ni is applicable, as explicitly shown in the below table:

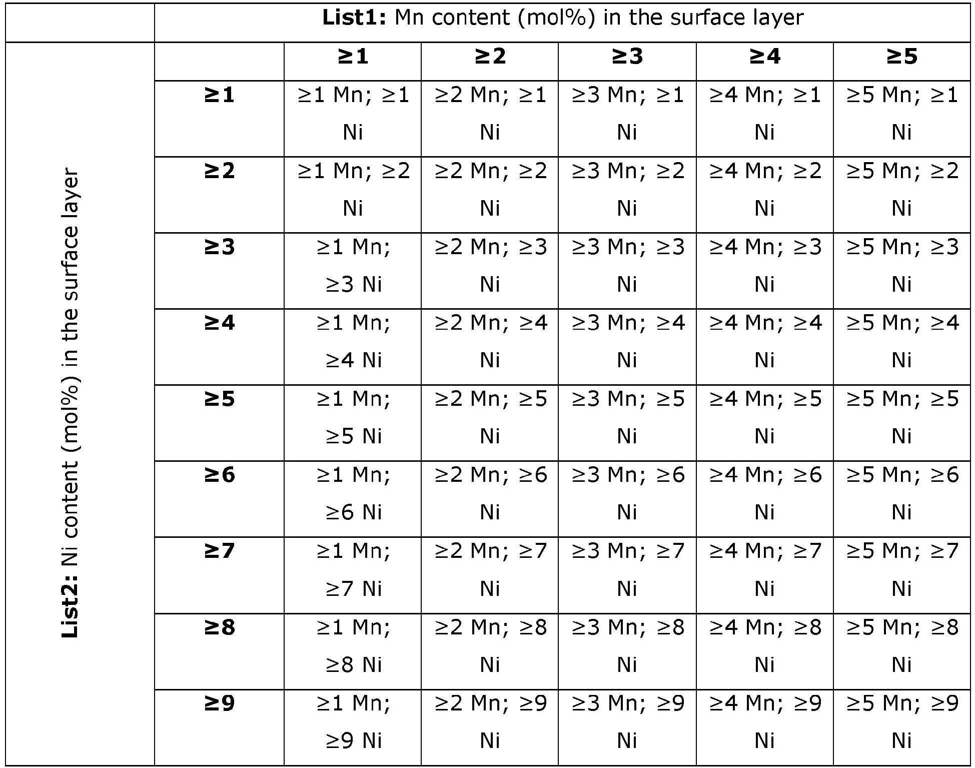

The Mn and Ni content in the surface layer are determined by XPS or (S)TEM [(Scanning) Transmission Electron Microscopy].

### Embodiment 26

In a 26^{h} embodiment according any of the **Embodiments 1 to 25,** the positive active material may have particles having Mn (or Mn and Ni) enriched islands on their surface.

### Embodiment 27

In this 27^{th} embodiment according to any of the **Embodiments 1 to 23,** a =0.

### Embodiment 28

In a 28^{th} embodiment according to any of the **Embodiments 1 to 25,** the core may comprise at least the elements Li, Co, and oxygen. The core may also comprise (an) additional element(s) which can be Al or either one or more elements of the group consisting of Al, Ga and B. The core has preferably a layered crystal structure (hexagonal α-NaFeO₂ type structure or R-3m structure) where layers of lithium ions are located between slabs of CoO₆ octahedron. The surface may further comprise either one or more elements of the group consisting of Li, Co, Al, O, Mg, Zr, and Ti. The surface can have a layered crystal structure and optionally be a mixture of elements of the core and one or more elements of the group consisting of Li, Co, Al, O, Mg, Zr, Ti. In particular, the surface layer may consist of a mixture of the elements of the core and inorganic N-based oxides, wherein N is either one or more metals of the group consisting of Li, Mn, Ni, Co, Al, O, Mg, Zr, Ti.

Preferably, the core comprises a plurality of grains (or crystal domain or crystallites or primary particles) which are delimited one to another by grain boundaries or at least one grain boundary (a grain boundary being an interface between two grains or crystallites of the core). Therefore, the core may comprise secondary particles including these primary particles.

An illustrative and non-limitative embodiment of the distributions of elements other than Co, Li and oxygen (such as Ni, Mn, Al, and Mg) in the positive powderous material are described below:
1) Ni and Mn are enriched in the surface layer, meaning that:
   i) The surface layer has a Mn concentration that is higher than in the core of said particles; and
   ii) The surface layer has a Ni concentration that is higher than in the core of said particles;

Preferably, the Mn concentration in the surface layer of the powderous positive active material is higher than, preferably at least twice of, the overall Mn concentration.

Preferably, the Ni concentration in the surface layer of the powderous positive active material is higher than the overall Ni concentration.

More preferably, the concentration of Ni in the core of the powderous positive active material is very small, since for instance the maximum doping level in the core of the particles is about 0.2 mol%.

Optionally, the grain boundaries between the crystal domains (primary particles or grains or crystallites) in the core have a higher Mn concentration than the overall Mn concentration.

Preferably, the grain boundaries between the crystal domains (primary particles or grains or crystallites) in the core have a higher Ni concentration than the overall Ni concentration.

The overall Mn (or Ni) concentration is measured for the entire powderous active material: core + surface layer, or core + surface layer and/or grain boundaries.
2) Most of Mg is included in the surface layer, and optionally at the grain boundaries, since the maximum doping level in the core is for instance of about 0.2 mol%.
3) Al is homogenously distributed in the entire powderous active material (core + surface layer + grain boundaries, or core + surface layer and/or grain boundaries).

In the above described distribution, at least one element such as Ni, Mn, Al and Mg is preferably present at the grain boundaries. According to the present invention, when an element is included at a grain boundary, this element is present at a surface of at least one of the primary particles of the secondary particles included in the core.

The above described distribution of elements other than Co, Li and oxygen maybe achieved by applying a manufacturing process which is a two-step firing method for manufacturing the active material; said manufacturing method comprising the steps of:
- providing a first mixture of a first Co- and M"-comprising and a first Li-comprising precursor powder, the first mixture having a Li to metal molar ratio >1.01, with M" being at least one of the elements Al, Ga, B, Mg, Ti, and Zr, preferably M' = Al and Mg;
- sintering the first mixture in an oxygen comprising atmosphere at a temperature T1 of at least 900°C, thereby obtaining a Li-enriched lithium M"-based oxide compound,
- providing a second Co- and M'-comprising precursor powder, wherein M' comprises Mn and/or Ni elements, and
- mixing the Li-enriched lithium M"-based oxide compound and the second Co- and M'-comprising precursor powder, thereby obtaining a second mixture wherein the molar ratio of Li to metal is 1.00±0.01, and
- sintering the second mixture in an oxygen comprising atmosphere at a temperature T2 of at least 900°C.

The surface layer and the grain boundaries compositions of the active material may therefore result from this two-step firing manufacturing process.

After the first sintering step, Al and Mg are homogenously distributed overall the entire active material.

After the second sintering step, Al does not redistribute, which means that a homogenous distribution of Al will remain.

The two-step firing may therefore result in that Al is homogenously distributed overall the entire active material (core + surface layer; optionally core + surface layer and/or grain boundaries).

However, Mg moves towards the surface of the active material and optionally at the grain boundaries after the second sintering, resulting at least in the formation of a Mg-based (Mg oxide-based) surface coating layer. Therefore, after the second sintering, a migration of Mg from the core of the active material to the surface of active material (optionally, in the surface layer and/or in the grain boundaries) has taken place. It results from this migration that the Mg is included in the surface layer and/or at the grain boundaries of the core. Preferably, Ni and/or Mn elements (M' elements) can be added before the second sintering step.

If the molar ratio (Li:M) of Li/(Co+Ni+Mn+M") is near to 1.00 (for instance 1.00
± 0.01) when the second sintering step is effected, with M" being one of more of the following elements: Ti, Zr, Al, Mg; in particular with M" being Al, all Ni remains at the surface of the particle during said second sintering. Some Mn can penetrate into the core of the active material while most of Mn does not penetrate completely. Therefore, the surface layer of the active material is then enriched with Mn.

The two-step firing may result in that elements such as Mg and/or Ni are present in (enriched in) the surface layer of the active material (optionally, Mg and/or Ni are in the surface layer and/or at the grain boundaries), whereas Mn may be present and distributed as a gradient concentration from the surface layer to the core.

Titanium (Ti), like Mg, is typically present in the surface layer of the active material (optionally in the core and in the surface layer and/or at the grain boundaries).

Preferably, the surface layer may comprise at least one phase. A phase can be defined as a subdomain of a crystallite, said subdomain being amorphous or having a specific crystallinity.

Ti can be present in a first phase in the surface layer and/or at the grain boundaries. As an example, if Li:M is near to 1.00 during the second sintering step, it allows to achieve a preferred Li:M molar ratio of ± 1.00 within said first phase, leading to improved cycle life and reduced bulging properties of the active material.

Ti can be present in a second phase in the surface layer and/or at the grain boundaries. As an example, if Li:M is > 1.00, preferably if Li:M is > 1.01 during the second sintering step, Ti traps additional lithium and forms Li₂TiO₃ partly constituting said second phase.

A dopant having a similar behavior as Ti and Mg is Zirconium (Zr).

Zr, like Mg and/or Ti, is typically present in the surface layer of the active material (optionally in the core and in the surface layer and/or at the grain boundaries).

Similarly to Ti, Zr improves the rate performance and allows to achieve a preferred Li:M stoichiometry within a first phase in the surface layer and/or in the grain boundaries.

Zr can be present in a second phase in the surface layer and/or in the grain boundaries. As an example, if Li:M is superior to 1.00 (preferably superior to 1.01) during the manufacturing process, Zr traps additional lithium during the second sintering step and forms Li₂ZrO₃ and/or Li₄ZrO₄ partly constituting said second phase.

Optionally, Zr can form, during the manufacturing process, a third phase on the surface of the first and/or second phases in the layer surface by reaction with other dopants like Mg. As an example, Li-Zr-Mg-oxide phases can be obtained.

### Embodiment 29

The present invention may also concern a liquid electrolyte lithium secondary battery cell that may have an operating voltage superior or equal to 4.4V and preferably inferior or equal to 4.5V, said liquid electrolyte lithium secondary battery cell comprising:
- a positive electrode (or cathode) including a powderous positive active material (i.e. an active material in a powder form) represented by the following chemical formula:
   Li₁₋ₓ(Co_{1-a-b-c}NiₐMn_{b}M"_{c})₁₊ₓO₂ with -0.005≤x≤0.005, 0.02≤a≤0.09, 0.01≤b≤0.05, and 0.002≤c≤0.02, wherein M" is either one or more metals of the group consisting of Al, Mg, Ti and Zr; and

- an electrolyte composition as defined in any of the **Embodiments 1 to 20.**

In this 29^{th} embodiment, the powderous positive active material may comprise particles having a core and a surface layer thereon, said surface layer having a Mn concentration that is higher than in the core of said particles.

Preferably, the surface layer comprises Ni in addition to Mn. Moreover, the surface layer may have a Ni concentration that is higher than in the core of said particles.

More preferably, the positive active material may have particles having Mn (or Mn and Ni) enriched islands on their surface.

For any successive preferred amounts of Mn in the surface layer from the list3: ≥1, ≥2, ≥3, ≥4, ≥5 mol% of Mn, a preferred amount of Ni in the surface layer from the list4: ≥1, ≥2, ≥3, ≥4, ≥5, ≥6, ≥7, ≥8, ≥9 mol% of Ni is applicable, as explicitly shown in the below table:

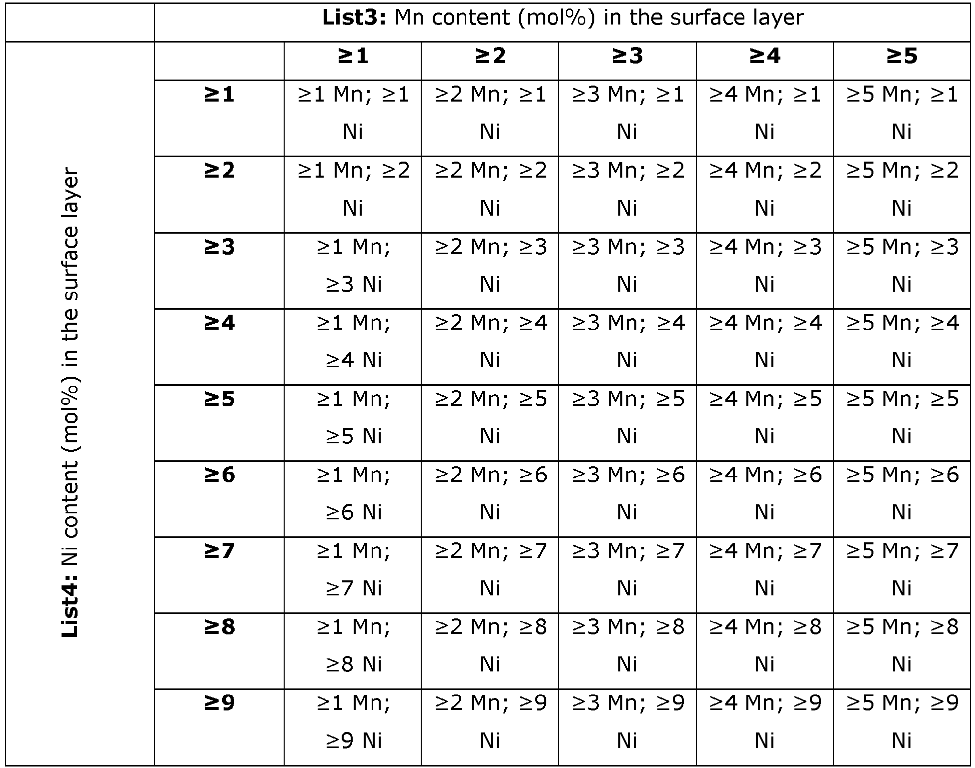

The Mn and Ni content in the surface layer are determined by XPS or (S)TEM [(Scanning) Transmission Electron Microscopy].

### Embodiment 30

In this 30^{th} embodiment according to **Embodiment 29,** the powderous positive active material is represented by the following chemical formula:

Li₁₋ₓ(CO_{0.937}Ni_{0.028}Mn_{0.015}Al_{0.01}Mg_{0.01})₁₊ₓO₂, with -0.005 ≤ x ≤ 0.005.

### Embodiment 31

The present invention can also cover a device, preferably and electric device, comprising the liquid electrolyte lithium secondary battery cell according to the invention, preferably according to any of the preceding **Embodiments 1 to 30.**

### BRIEF DESCRIPTION OF THE FIGURES

Figure 1 depicts the *Relative Discharge Capacity* **B** (in %) during a cycle life test effected at 25°C and 4.45V, wherein variables are positive electrode material compositions and electrolytes.
Figure 2 depicts the *Relative Discharge Capacity* during a cycle life test effected at 45°C and 4.45V, wherein variables are positive electrode material compositions and electrolytes.
Figure 3 depicts the *Relative Discharge Capacity* during a cycle life test effected at 45°C and 4.45V, wherein a variable is electrolytes.

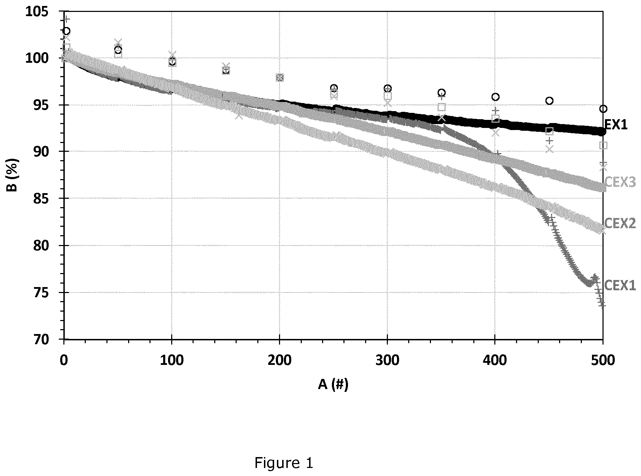

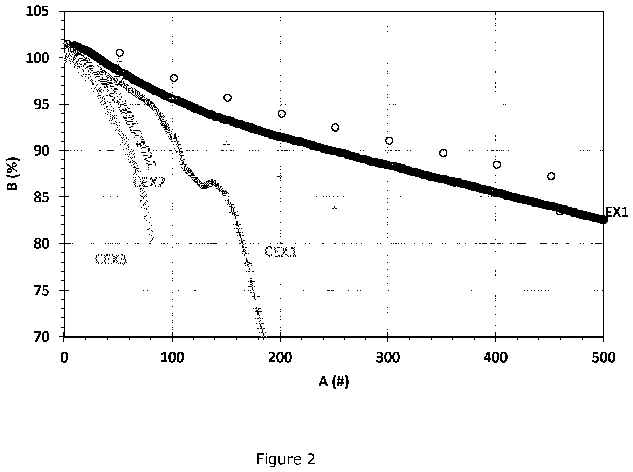

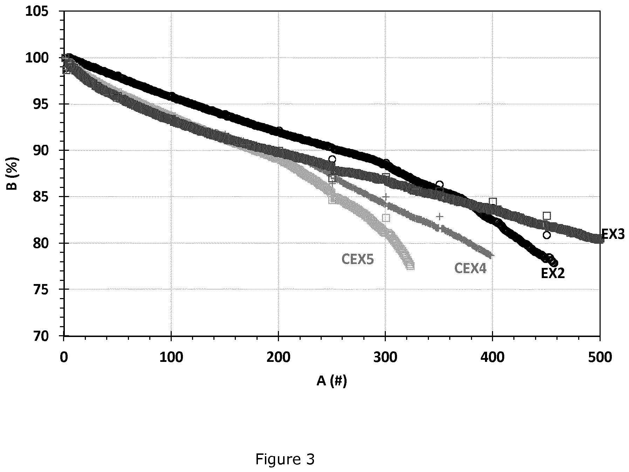

In Figures 1, 2 and 3, **A** is the number # of cycles.

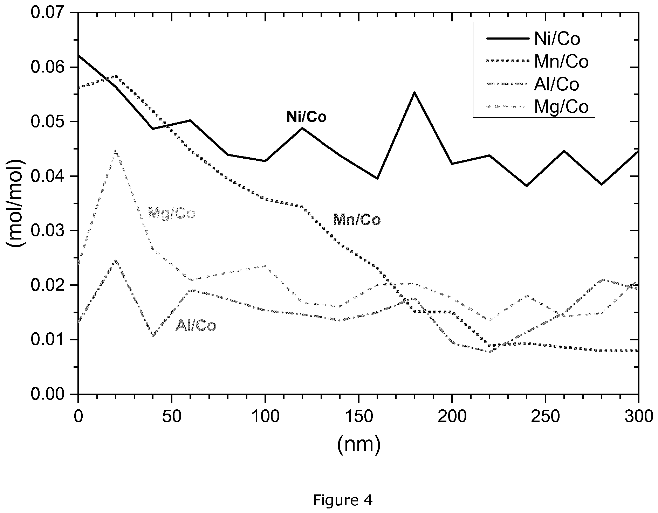

Figure 4 depicts the distribution of elements in a surface layer of an LCO CAT1 particle, wherein x axis is the distance from the most outer surface and y axis is the concentration of element with respect to Co molar ratio.

### DETAILED DESCRIPTION

In the drawings and the following detailed description, preferred embodiments are described in detail to enable practice of the invention. Although the invention is described with reference to these specific preferred embodiments, it will be understood that the invention is not limited to these preferred embodiments.

In the present detailed description, it is demonstrated in the examples provided hereunder that the combination of a Mn bearing doped LCO with the electrolyte composition as specified in the invention in a liquid electrolyte-based battery brings a surprising synergetic effect, leading to the following properties:
1) The cycle life of the battery using the Mn bearing doped LCO at room temperature or at higher temperatures (i.e. at least at 40°C, for instance at 45°C) is significantly improved at high voltage if the electrolyte according is used in the battery. In particular, it is demonstrated that the electrolyte, containing remarkably high amounts of fluorinated acyclic carboxylic acid ester and low amounts of non-fluorinated cyclic carbonate, shows an advantageously long cycle life at high temperature; and
2) The lithium secondary battery according to the invention has remarkable safety properties at a high voltage and high temperatures.

This synergetic effect allows a safe use of such a battery at high voltages (i.e. at voltages >/= 4.4V, for instance at a voltage of 4.45V).

In the framework of the present invention, the Mn bearing doped LCO according to the invention is characterized by the formula Li₁₋ₓ(Co_{1-a-b-c}NiₐMn_{b}M"_{c})₁₊ₓO₂ with -0.01≤x≤0.01, 0.00≤a≤0.09, 0.01≤b≤0.05, and 0.00≤c≤0.03, wherein M" is either one or more metals of the group consisting of Al, Mg, Ti and Zr.

The electrolyte composition comprises:
a) from 5.0% to 17.0% of a non-fluorinated cyclic carbonate, and from 0.5% to 10.0% of a fluorinated cyclic carbonate,
b) from 70.0% to 95.0% of a fluorinated acyclic carboxylic acid ester,
c) at least one electrolyte salt,
d) from 0.1% to 5% of a lithium boron compound,
e) from 0.2% to 10% of a cyclic sulfur compound, and
f) optionally at least one cyclic carboxylic acid anhydride,
all percentages being expressed by weight relative to the total weight of the electrolyte composition.

According to one particular embodiment of the present invention, the electrolyte composition comprises at least one, at least two or any combinations of the following features (all percentages being expressed by weight relative to the total weight of the electrolyte composition):
- from 5.0% to 17.0% of a non-fluorinated cyclic carbonate selected from ethylene carbonate, propylene carbonate, vinyl ethylene carbonate and mixtures thereof;
- from 0.5% to 10%, preferably from 2% to 10%, more preferably from 3% to 10% of 4-fluoro-1,3-dioxolan-2-one;
- from 70.0% to 95.0% of a fluorinated acyclic carboxylic acid ester selected from 2,2-difluoroethyl acetate, 2,2-difluoroethyl propionate, 2,2,2-trifluoroethyl acetate, 2,2-difluoroethyl formate and mixtures thereof;
- from 5.0% to 20.0%, preferably from 9% to 16%, more preferably from 11% to 16%, of an electrolyte salt selected from lithium hexafluorophosphate, lithium bis(fluorosulfonyl)imide, lithium bis(trifluoromethanesulfonyl)imide and mixtures thereof;
- from 0.10% to 5.0%, preferably from 0.40% to 2.0%, more preferably from 0.50% to 1.0% of lithium bis(oxalato)borate;
- from 0.2% to 10%, preferably from 0.4% to 5%, more preferably from 0.5% to 3% of a cyclic sulfur compound selected from 1,3,2-dioxathiolane-2,2-dioxide, 1,3,2-dioxathiane-2,2-dioxide, 1,3-propane sultone and mixtures thereof;
- from 0.10% to 5%, preferably from 0.25% to 1%, more preferably from 0.30% to 0.80% of a cyclic carboxylic acid anhydride selected from maleic anhydride, succinic anhydride, glutaric anhydride, 2,3-dimethylmaleic anhydride, citraconic anhydride and mixtures thereof.

The disclosure of all patent applications, and publications cited herein are hereby incorporated by reference, to the extent that they provide exemplary, procedural or other details supplementary to those set forth herein. Should the disclosure of any of the patents, patent applications, and publications that are incorporated herein by reference conflict with the present specification to the extent that it might render a term unclear, the present specification shall take precedence.

The invention is further illustrated by the following examples:

### Description of full cell preparations

200mAh or 1600mAh pouch-type batteries are prepared as follows: the positive electrode material powder, Super-P (Super-P Li commercially available from Timcal), and graphite (KS-6 commercially available from Timcal) as positive electrode conductive agents and polyvinylidene fluoride (PVdF 1700 commercially available from Kureha) as a positive electrode binder are added to NMP (N-methyl-2-pyrrolidone) as a dispersion medium. The mass ratio of the positive electrode material powder, conductive agent, and binder is set at 96/2/2. Thereafter, the mixture is kneaded to prepare a positive electrode mixture slurry. The resulting positive electrode mixture slurry is then applied onto both sides of a positive electrode current collector, made of a 12µm thick aluminum foil for 200 mAh pouch-type batteries and 20µm thick aluminum foil for 1600 mAh pouch-type batteries. The positive electrode active material loading weight is around 13~15 mg/cm². The electrode is then dried and calendared using a pressure of 120Kgf. The typical electrode density is 4g/cm³. In addition, an aluminum plate serving as a positive electrode current collector tab is arc-welded to an end portion of the positive electrode.

Commercially available negative electrodes are used. In short, a mixture of graphite, CMC (carboxy-methyl-cellulose-sodium) and SBR (styrenebutadiene-rubber), in a mass ratio of 96/2/2, is applied on both sides of a copper foil. A nickel plate serving as a negative electrode current collector tab is arc-welded to an end portion of the negative electrode.

A sheet of the positive electrode, a sheet of the negative electrode, and a sheet of a conventional separator (e.g. a ceramic coated separator with a thickness of 20µm and having a porosity superior or equal to 50% and inferior or equal to 70%; preferably of 60%) interposed between them are spirally wound using a winding core rod in order to obtain a spirally-wound electrode assembly. The wounded electrode assembly and the electrolyte are then put in an aluminum laminated pouch in an air-dry room with dew point of -50°C, so that a flat pouch-type lithium secondary battery is prepared. The design capacity of the secondary battery is around 200mAh or 1600mAh when charged to 4.45V.

The non-aqueous electrolyte solution is impregnated for 8 hours at room temperature. The battery is pre-charged at 15% of its theoretical capacity and aged 1 day at room temperature. The battery is then degassed and the aluminum pouch is sealed. The battery is prepared for use as follows: the battery is charged using a current of 0.25C (with 1C=200mAh or 1600mAh) in CC mode (constant current) up to 4.45V then CV mode (constant voltage) until a cut-off current of C/20 is reached. Then, the battery is discharged in CC mode at 0.5C rate down to a cut-off voltage of 3.0V.

### Description of testing methods

### A) Cycle life test

Pouch-type batteries prepared by above preparation method are charged and discharged several times under the following conditions, both at 25°C and 45°C, to determine their charge-discharge cycle performance:
- Charging is performed in CC mode under 1C rate up to 4.45V, then CV mode until C/20 is reached,
- The cell is then set to rest for 10 minutes,
- Discharge is done in CC mode at 1C rate down to 3.0V,
- The cell is then set to rest for 10 minutes,
- The charge-discharge cycles proceed until the battery reaches 80% retained capacity.

The first efficiency is the ratio between the first discharge capacity and the first charge capacity. This first irreversibility value gives indication on the correct conditioning of the battery.

The retained capacity at the different cycles are calculated as the ratio of the discharge capacity obtained at the cycle number to cycle 2.

The internal resistance or direct current resistance (DCR) is measured by suitable pulse tests of the battery. DCR is measured by suitable pulse tests of the battery. The measurement of DCR is for example described in "Appendix G, H, I (page 2) and J of the USABC Electric Vehicle Battery Test Procedures" which can be found, for instance, at http://www.uscar.org. USABC stands for "US advanced battery consortium" and USCAR stands for "United States Council for Automotive Research".

In the examples of table 1 below, the cycle life is the number of cycles at 90% of the relative capacity when measured at 25°C. The cycle life measured at 45°C is the number of cycles required to reach at least 80% of the relative capacity.

### B) Bulging test

Pouch-type batteries prepared by the above preparation method are fully charged until 4.45V and inserted in an oven which is heated to 90°C, then stay for 4 hours. At 90°C, the charged cathode reacts with electrolyte and creates gas. The evolved gas creates bulging. The thickness change ((thickness after storage before storage)/thickness before storage) is measured after 4 hours. Results of bulging tests are provided in table 3.

### C) High temperature storage

Pouch-type batteries prepared by the above preparation method are fully charged until 4.45V then stored at 60°C for 2 weeks. The cells are then started in discharge at 1C at room temperature to measure the retained (or residual) capacity ((Capacity after storage - capacity before storage)/capacity before storage). A full cycle at 1C (with CV) allows to measure the recovered capacity ((Capacity after storage - capacity before storage)/capacity before storage). Results of high temperature storage are provided in table 2.

### D) EDS analysis

To measure the content of elements included in the surface layer and the core material, respectively, of a LCO particle, EDS (Energy-Dispersive X-ray Spectroscopy) analysis is performed using a JEOL JSM 7100F SEM equipment with a 50mm² X-MaxN EDS sensor from Oxford instruments after a cross-section preparation. The cross section of a LCO particle is prepared with the use of an ion beam cross-section polisher (CP) instrument, which is a JEOL (IB-0920CP). The instrument uses argon gas as beam source. LCO powder is mixed with a resin and hardener, then the mixture is heated for 10 minutes on a hot plate. After heating, it is placed into the ion beam instrument for cutting and the settings are adjusted with a voltage of 6.5 kV for a 3 hours duration.

### E) ICP analysis

The contents of each elements in the positive electrode materials are measured with an Inductively Coupled Plasma (ICP) method by using an Agillent ICP 720-ES. 2g of precursor powder sample is dissolved into 10 mL of high purity hydrochloric acid in an Erlenmeyer flask. The flask could be covered by glass and heated on a hot plate for complete dissolution of the precursor. After being cooled to the room temperature, the solution is moved to a 100 mL volumetric flask which has been beforehand rinsed 3~4 times using distilled (DI) water. Afterwards, the volumetric flask is filled with DI water up to the 100 mL mark, followed by complete homogenization. 5 mL solution is taken out by a 5mL Pipette and transferred into a 50 mL volumetric flask for a 2nd dilution, where the volumetric flask is filled with 10% hydrochloric acid up to the 50 mL mark and then homogenized. Finally, this 50 mL solution is used for ICP measurement.

### F) TEM-EDS analysis

A Transmission Electron Microscopy (TEM) sample is prepared by the means of a focused ion beam (FIB) using a Helios 450HP FIB. A LCO powder is loaded on a carbon tape imbedded FIB sample holder. The thin cross section of a selected LCO particle is prepared in the FIB and the cut particle is loaded in a TEM sample holder.

The TEM-EDS of the cut LCO particle is measured using a JEM-ARM300F Grand ARM TEM. The TEM sample holder, prepared by the FIB equipment, is transported into the TEM. The distribution of elements in the surface layer of a LCO particle is measured by the TEM-EDS.

### Results

### Part I: Examples 1 and Counter Examples 1 to 3

Example 1 and Counter Examples 1 to 3 relates to 200mAh pouch-type batteries prepared from CAT1 Mn bearing doped LCO and different electrolytes (EL1 and EL2).

In this Part I of the results, it is demonstrated that a pouch-type battery comprising the combination of the LCO cathode material and an electrolyte composition comprising:
a) a non-fluorinated cyclic carbonate (for instance PC), and a fluorinated cyclic carbonate (for instance FEC),
b) a fluorinated acyclic carboxylic acid ester (for instance DFEA),
c) at least one electrolyte salt (for instance LiPF₆),
d) a lithium boron compound (for instance LIBOB), and
e) a cyclic sulfur compound (for instance Esa),
has remarkable safety properties at a high voltage and high temperatures since it is prone to a limited bulging, as expressed by a thickness change < 35% under high temperature storage conditions (cfr. table 3 below).

Aside the remarkable safety properties, the combination illustrated in EX1 retains good electrochemical properties.

### Example 1 (EX1)

A Mn bearing doped LCO CAT1 is prepared according to below described process.

A cobalt precursor Co₃O₄, of which the average particle size (measured using a Malvern Mastersizer 3000 with Hydro MV wet dispersion accessory after dispersing the powder in an aqueous medium) is around 2.8µm, is mixed with a lithium precursor such as Li₂CO₃, and MgO and Al₂O₃ as dopants in a typical industrial blender to prepare "Blend-1", wherein the molar ratio between Li and Co (Li/Co) is 1.05 to 1.10, Mg/Co is 0.01, and Al/Co is 0.01. The Blend-1 in ceramic trays is fired at 900°C to 1100°C for 5 to 15 hours in a kiln. The first sintered powder is de-agglomerated and screened by a milling equipment and sieving tool to prepare a doped intermediate LCO named "LCO-1". The Li/Co of LCO-1 from ICP analysis is 1.068. The LCO-1 is mixed with a mixed metal hydroxide (M'(OH)₂, M'=Ni_{0.55}Mn_{0.30}Co_{0.15}) of which the average particle size (measured using a Malvern Mastersizer 3000 with Hydro MV wet dispersion accessory after dispersing the powder in an aqueous medium) is around 3µm by a typical industrial blender to prepare "Blend-2", wherein the amount of M'(OH)₂ is 5mol% compared to the cobalt in LCO-1 (M'/Co_{Lco-1}=0.05). M'(OH)₂ is prepared by typical coprecipitation technology. The Blend-2 in ceramic trays is fired at 900°C to 1100°C for 5 to 15 hours in a kiln. The second sintered powder is de-agglomerated and screened by a milling equipment and sieving tool to prepare a final Mn bearing doped LCO named "CAT1" (LiM₁O₂, wherein M₁= Co_{0.937}Ni_{0.028}Mn_{0.015}Al_{0.01}Mg_{0.01}). In CAT1, the ratio Li:M₁ may be equal to (1-x):(1+x) wherein -0.005 ≤ x ≤ 0 or 0 ≤ x ≤ 0.005.

An electrolyte composition EL1 is prepared by combining 2,2-difluoroethyl acetate (DFEA, Solvay) monofluoroethylene carbonate (FEC, Enchem), propylene carbonate (PC, Enchem) in a 75:4:21 weight ratio in an Argon gas purged dry box.

85.78 g of the mixture described above is combined with 11.37 g of lithium hexafluorophosphate (LiPF₆, Enchem), 0.85 g of lithium bis(oxalato)borate (LiBOB, Enchem), 1.50 g of 1,3,2-dioxathiolane 2,2-dioxide (ESa, Enchem) and 0.50g of maleic anhydride (MA, Enchem). The material is gently agitated to dissolve the components and prepare the final formulation.

200mAh pouch-type batteries are prepared by the preparation method described in "Description of full cell preparations" with following details:
i) CAT1 Mn bearing doped LCO is used as a positive electrode material; and
ii) EL1 electrolyte composition is used.

The preparation conditions are described in Table 1.

These batteries are tested by the testing methods described in "Description of testing methods" at different testing temperatures.

### Counter example 1 (CEX1)

An electrolyte EL2 is prepared according to the following process. Lithium hexafluorophosphate (LiPF₆) salt is dissolving at a concentration of 1.2mol/L in a mixed solvent of EC (ethylene carbonate) and DEC (diethyl carbonate) in a volume ratio of 1:2 with 2vol% of VC (vinylene carbonate).

200mAh pouch-type batteries are prepared by the preparation method described in "Description of full cell preparations" with following details:
i) CAT1 Mn bearing doped LCO is used as a positive electrode material; and
ii) EL2 electrolyte is used.

### Counter example 2 (CEX2)

A Mn free doped LCO CAT2 is prepared according to the following process:
A cobalt precursor Co₃O₄, of which the average particle size (measured using a Malvern Mastersizer 3000 with Hydro MV wet dispersion accessory after dispersing the powder in an aqueous medium) is around 2.8µm, is mixed with a lithium precursor such as Li₂CO₃, and MgO and TiO₂ as dopants in a typical industrial blender to prepare "Blend-C1", wherein the molar ratio between Li and Co (Li/Co) is 1.04 to 1.10, Mg/Co is 0.0025, and Ti/Co is 0.0008. The Blend-C1 in ceramic trays is fired at 900°C to 1100°C for 5 to 15 hours in a kiln. The first sintered powder is de-agglomerated and screened by a milling equipment and sieving tool to prepare a doped intermediate LCO named "LCO-C1". The Li/Co of LCO-C1 from ICP analysis is 1.054. The LCO-C1 is mixed with Li₂CO₃, Co₃O₄, MgO, TiO₂, and Al₂O₃ by a typical industrial blend to prepare "Blend-C2", where in 13mol% Co are added compared to the cobalt in LCO-C1, the target Li/Co, Mg/Co, Ti/Co, Al/Co are 0.99 to 1.01, 0.01, 0.0028, and 0.01, respectively. The Blend-C2 in ceramic trays is fired at 900 to 1100°C for 5 to 10 hours in a kiln. The second sintered powder is de-agglomerated and screened by a milling equipment and sieving tool to prepare a final Mn free doped LCO named "CAT2" (LiM₂O₂, wherein M₂= Co_{0.9772}Al_{0.01}Mg_{0.01}Ti_{0.0028}). In CAT2, the ratio Li:M₂ may be equal to (1-x):(1+x) wherein -0.005 ≤ x ≤ 0 or 0 ≤ x ≤ 0.005.

200mAh pouch-type batteries are prepared by the preparation method described in "Description of full cell preparations" with following details:
i) CAT2 Al doped Mn free LCO is used as a positive electrode material; and
ii) EL1 electrolyte composition is used.

### Counter example 3 (CEX3)

200mAh pouch-type batteries are prepared by the preparation method described in "Description of full cell preparations" with following details:
i) CAT2 Al doped Mn free LCO is used as a positive electrode material; and
ii) EL2 electrolyte composition is used.

Table 1 shows that the best performances in term of cycle life are obtained for the combination of CAT1 with EL1, which allows to reach a high level of performance.

Table 1 also shows the evolution of the DCR at 25°C and 45°C. The DCR data are in line with the cycle life of the cells: lower DCR values indicate lower battery degradation (therefore an improved cycle life).

Moreover, the retained/recovered capacity with the couple CAT1/EL1 is drastically better that the other combinations (see table 2).

Table 3 shows the bulging data of the different examples and confirms again the positive effect of the couple CAT1/EL1. Provided that the high temperature storage tests are done at 60°C and the bulging test are effected at 90°C, results depicted in table 3 demonstrate that electrolyte EL1 remain stable and do not degrade at 60°C. EL2, on the contrary, is not stable at 60°C and reacts with all the tested grades. This clearly demonstrates that EL1, when combined with CAT1, has the broadest stability window at 60°C.

From the EX1 data provided in tables 1 to 3; it is clear that the combination of EL1 and CAT1 in a secondary battery cell allows to achieve high energy densities, while limiting the DCR and bulging when operating at high voltages.

### Part II: Examples 2 and 3, and Counter Examples 4 and 5

### Example 2 (EX2)

1600mAh pouch-type batteries are prepared by the preparation method described in "Description of full cell preparations" with following details:
i) CAT1 Mn bearing doped LCO is used as a positive electrode material; and
ii) EL1 electrolyte composition is used.

Example 3 and Counter Examples 4 and 5 relates to 1600mAh pouch-type batteries prepared from CAT1 Mn bearing doped LCO and different electrolytes prepared by simple mix of their ingredients by using a magnetic stirrer: the ingredients are added one by one in a recipient lodged in an Argon gas purged dry box, starting with the solvents, then the electrolyte salt and then the additives. The mix is gently agitated until the composition becomes transparent. The content of each composition present in the Example 3, and in the Counter Examples 4 and 5, is indicated in table 4 below. The following ingredients, supplied by the specified companies, are used.
* LiPF₆: Lithium hexafluorophosphate (Enchem)
* FEC: Monofluoroethylene carbonate (Enchem)
* PC: Propylene carbonate (Enchem)
* DFEA: 2,2-Difluoroethyl Acetate (Solvay)
* LiBOB: Lithium bis(oxalate)borate (Enchem)
* ESa: 1,3,2-Dioxathiolane 2,2-dioxide (Enchem)
* MA: Maleic anhydride (Enchem)
* PES: 1,3,2-Dioxathiane 2,2-Dioxide (Enchem)

### Example 3 (EX3)

1600mAh pouch-type batteries are prepared by the preparation method described in "Description of full cell preparations" with following details:
i) CAT1 Mn bearing doped LCO is used as a positive electrode material; and
ii) EL3 electrolyte is used.

### Counter example 4 (CEX4)

1600mAh pouch-type batteries are prepared by the preparation method described in "Description of full cell preparations" with following details:
i) CAT1 Mn bearing doped LCO is used as a positive electrode material; and
ii) EL4 electrolyte is used.

### Counter example 5 (CEX5)

1600mAh pouch-type batteries are prepared by the preparation method described in "Description of full cell preparations" with following details:
i) CAT1 Mn bearing doped LCO is used as a positive electrode material; and
ii) EL5 electrolyte is used.

In this Part II of the results, it is demonstrated that by selecting: i) the amount of fluorinated acyclic carboxylic acid ester in a first range from 70% to 95% (by weight relative to the total weight of the electrolyte composition) and ii) the amount of non-fluorinated cyclic carbonate in a second range from 0.5% to 10.0% (by weight relative to the total weight of the electrolyte composition), and therefore obtaining a composition like EL3, the cycle life of a battery comprising the combination and the LCO material and electrolyte composition is significantly extended at a high temperature. It is indeed confirmed by the results provided in table 1 wherein cycles at 80% of relative capacity (measured at 45°C) are given for EX2 (CAT1-EL1) and EX3 (CAT1-EL3)-based 1600mAh pouch-type of cells.

Remarkably, the combination of the LCO cathode material and the electrolyte allows to design batteries having low bulging, with a thickness change measured at maximum 5% for the combination of CAT1 with EL3 in a 1600mAh pouch-cell.

**Table 1. Cycle life**

| Example | Positive electrode material | Electrolyte | Full cell type (size) | Cycles at 90% of relative capacity (25°C) | DCR increase after 500 cycles (25°C) | Cycles at 80% of relative capacity (45°C) | DCR increase after 200 cycles (45°C) |
|---|---|---|---|---|---|---|---|
| EX1 | CAT1 | EL1 | 200mAh | 1000 | 101% | 550 | 110% |
| CEX1 | CAT1 | EL2 | 200mAh | 400 | 120% | 160 | 120% |
| CEX2 | CAT2 | EL1 | 200mAh | 360 | 104% | 100 | 111%* |
| CEX3 | CAT2 | EL2 | 200mAh | 280 | 122% | 70 | 124%* |
| EX2 | CAT1 | EL1 | 1600mAh | - | - | 429 | 103% |
| EX3 | CAT1 | EL3 | 1600mAh | - | - | 504 | 106% |
| CEX4 | CAT1 | EL4 | 1600mAh | - | - | 379 | 108% |
| CEX5 | CAT1 | EL5 | 1600mAh | - | - | 310 | 116% |

| | | | | | | | |
|---|---|---|---|---|---|---|---|
| * DCR measured after 50 cycles only. | | | | | | | |

**Table 2. High temperature storage results**

| Example | Positive electrode material | Electrolyte | Full cell type (size) | Retained capacity (%) | Recovered capacity (%) |
|---|---|---|---|---|---|
| EX1 | CAT1 | EL1 | 200mAh | 62 | 83 |
| CEX1 | CAT1 | EL2 | 200mAh | 12 | 18 |
| CEX2 | CAT2 | EL1 | 200mAh | 24 | 66 |
| CEX3 | CAT2 | EL2 | 200mAh | 21 | 63 |

**Table 3. Bulging test results**

| Example | Positive electrode material | Electrolyte | Full cell type (size) | Thickness change (%) |
|---|---|---|---|---|
| EX1 | CAT1 | EL1 | 200mAh | 27 |
| CEX1 | CAT1 | EL2 | 200mAh | 27 |
| CEX2 | CAT2 | EL1 | 200mAh | 185 |
| CEX3 | CAT2 | EL2 | 200mAh | 206 |
| EX2 | CAT1 | EL1 | 1600mAh | 17 |
| EX3 | CAT1 | EL3 | 1600mAh | 5 |

**Table 4. Compositions of EL3, EL4 and EL5 compared to EL1 and 2 compositions**

| # | Salt (wt%)¹ | Solvent (wt%)¹ | Additives (wt%)¹ |
|---|---|---|---|
| EL1 | LiPF₆ (11.37%) | FEC (3.43%) PC (18.01%) DFEA (64.34%) | LIBOB (0.85%) ESa (1.5%) MA (0.5%) |
| EL2 | LiPF₆ (15%) | EC (28%) DEC (55%) VC (2%) | - |
| EL3 | LiPF₆ (11.19%) | FEC (3.38%) PC (8.45%) DFEA (72.63%) | LIBOB (0.85%) ESa (3.0%) MA (0.5%) |
| EL4 | LiPF₆ (11.19%) | FEC (3.38%) PC (17.74%) DFEA (63.34%) | LIBOB (0.85%) ESa (3.0%) MA (0.5%) |
| EL5 | LiPF₆ (11.19%) | FEC (3.38%) PC (17.74%) DFEA (63.34%) | LIBOB (0.85%) PES (3.0%) MA (0.5%) |

| | | | |
|---|---|---|---|
| ¹expressed in weight percent relative to the total weight of the composition | | | |

### Explanatory examples

### Explanatory example 1

The distribution of elements in the surface layer and at the center of LCO CAT1 particles is observed by EDS analysis.

The center (or center point) of a particle is defined as a middle point of the longest axis in a particle. In this explanatory example 1, the surface layer has been set up as the most outer part of a particle, which corresponds to a thickness of 1µm.

The center points and the surface layer of five different particles, which have the particle size of around 20µm, are measured and the values are averaged.

The ICP analysis of LCO CAT1indicates the contents of elements in an entire particle, averaged from ICP measurements performed on a sample of 2.0g.

Table EE1A shows the average contents of elements (with respect to the Co molar content) in the surface layer and the center point of five particles, along with the standard deviations, measured by the EDS analysis; and the contents of elements in the particles measured by the ICP analysis.

**Table EE1A. Distribution of elements with respect to the Co molar content in LCO CAT1, measured by EDS**

| Position | Mg/Co (mol/mol) | Al/Co (mol/mol) | Ni/Co (mol/mol) | Mn/Co (mol/mol) |
|---|---|---|---|---|
| EDS - Center | 0.007±0.004 | 0.013±0.002 | 0.008±0.007 | 0.004±0.002 |
| EDS - Surface | 0.011±0.003 | 0.011±0.002 | 0.040±0.027 | 0.028±0.020 |
| ICP | 0.010 | 0.011 | 0.030 | 0.016 |

Table EE1B shows the average contents of elements (with respect to the M molar content, with M = Co + Ni + Mn + Al + Mg) in the surface layer and the center point of five particles, along with the standard deviations, measured by the EDS analysis; and the contents of elements in the particles measured by the ICP analysis.

**Table EE1B. Distribution of elements with respect to the M molar, with M = Co + Ni + Mn + Al + Mg, in LCO CAT1, measured by EDS**

| Position | Mg/M (mol/mol) | Al/M (mol/mol) | Ni/M (mol/mol) | Mn/M (mol/mol) |
|---|---|---|---|---|
| EDS - Center | 0.007±0.004 | 0.012±0.002 | 0.008±0.007 | 0.004±0.002 |
| EDS - Surface | 0.010±0.003 | 0.010±0.002 | 0.036±0.023 | 0.025±0.017 |
| ICP | 0.010 | 0.011 | 0.030 | 0.016 |

Al is homogeneously distributed in the entire particles considering low standard deviation as well as small discrepancy of the average content between the surface layer and the center point. Mg is enriched in the surface layer. Mn is significantly enriched in the surface layer with big standard deviation. The big standard deviation indicates that the distributions of Mn is not homogeneous. For example, a part of the surface layer having Mn enriched islands has higher Mn contents.

### Explanatory example 2

The distribution of elements in the surface layer of a LCO CAT1 particle is observed by TEM-EDS analysis.

Figure 4 and Table EE2 show that the distribution of Mg, Al, Ni, and Mn in a surface layer of a LCO CAT1 particle with respect to Co concentration as a function of the distance from the most outer part of the particle. The said distance is defined as the length from an outer edge surface of a said particle to the center of a said particle.

Mg, Al, and Ni concentrations with respect to Co are relatively stable within the distance for 300 nm while Mn concentration rapidly decreases until 220 nm and it is stabilized. This means that the Ni is diffused more into the inner part of the particle than Mn. The minimal thickness of a surface layer is defined as a distance for which the gradient of the Mn concentration is not equal to zero. In this case, the minimal thickness of the surface layer, measured from an outer surface edge of the particles, is of around 300 nm (in particular between 250 nm and 300 nm, more precisely, the surface ends at a distance from the outer surface edge of around 280 nm).

The surface is densely and continuously connected to the core and cannot be physically separated from the particle. Hence in another embodiment the concentration in Ni and Mn - with increasing distance from the surface - decreases, possibly in a gradient-like manner and approaches zero in the inside of the particles, as confirmed by the EDS measurements provided in Tables EE1A and EE1B.

**Table EE2. Distribution of elements with respect to the Co molar content in the surface layer of LCO CAT1, measured by TEM-EDS**

| Distance (nm) | Mg/Co (mol/mol) | Al/Co (mol/mol) | Ni/Co (mol/mol) | Mn/Co (mol/mol) |
|---|---|---|---|---|
| 0 | 0.024 | 0.013 | 0.062 | 0.056 |
| 60 | 0.021 | 0.019 | 0.050 | 0.045 |
| 120 | 0.017 | 0.015 | 0.049 | 0.034 |
| 180 | 0.020 | 0.018 | 0.055 | 0.015 |
| 240 | 0.018 | 0.011 | 0.038 | 0.009 |
| 280 | 0.015 | 0.021 | 0.038 | 0.008 |
| 300 | 0.021 | 0.019 | 0.045 | 0.008 |

It is remarkable to note that, in the defined surface thickness of 280 nm, the (Ni:Co)_{S} and (Mn:Co)_{S} ratios measured by TEM-EDS are higher than the (Ni:Co)_{C} and (Mn:Co)_{C}, respectively, said (Ni:Co)_{C} and (Mn:Co)_{C} being measured at the center of the particles (from Table EE1A).

## Claims

1. A liquid electrolyte lithium secondary battery cell comprising:
- a positive electrode including a powderous positive active material represented by the following chemical formula:
Li₁₋ₓ(Co_{1-a-b-c}NiₐMn_{b}M"_{c})₁₊ₓO₂
with -0.01≤x≤0.01, 0.00≤a≤0.09, 0.01≤b≤0.05, and 0.00≤c≤0.03, wherein M" is either one or more metals of the group consisting of Al, Mg, Ti and Zr; and
- an electrolyte composition comprising:
1) from 5.0% to 17.0% of a non-fluorinated cyclic carbonate, and from 0.5% to 10% of a fluorinated cyclic carbonate,
2) from 70.0% to 95.0% of a fluorinated acyclic carboxylic acid ester,
3) at least one electrolyte salt,
4) from 0.10% to 5.0% of a lithium boron compound,
5) from 0.20% to 10.0% of a cyclic sulfur compound, and
6) optionally at least one cyclic carboxylic acid anhydride,
all percentages being expressed by weight relative to the total weight of the electrolyte composition.

2. The liquid electrolyte lithium secondary battery cell according to Claim 1, wherein the non-fluorinated cyclic carbonate is of formula (I) or (II) 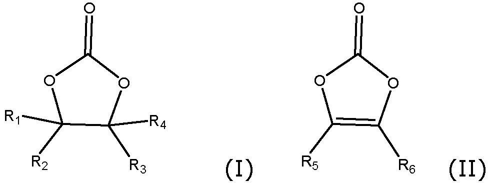 wherein R₁ to R₆ are independently selected from hydrogen, C₁ to C₃ -alkyl, C₂ to C₃ - alkenyl, or C₂ to C₃ -alkynyl groups.

3. The liquid electrolyte lithium secondary battery cell according to Claim 2, wherein the non-fluorinated cyclic carbonate is selected from ethylene carbonate, propylene carbonate, vinylene carbonate, ethyl propyl vinylene carbonate, vinyl ethylene carbonate, dimethylvinylene carbonate, and mixtures thereof, being preferably propylene carbonate.

4. The liquid electrolyte lithium secondary battery cell according to anyone of Claims 1 to 3, wherein the fluorinated cyclic carbonate is of formula (I) or (II) 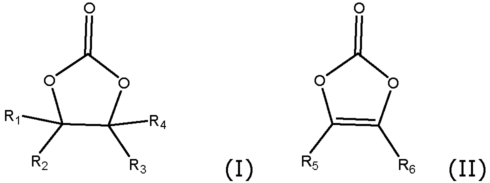 wherein at least one of R₁ to R₆ is fluorine or a C₁ to C₃ -fluoroalkyl, C₂ to C₃ -fluoroalkenyl, C₂ to C₃ -fluoroalkynyl group.

5. The liquid electrolyte lithium secondary battery cell according to Claim 4, wherein the fluorinated cyclic carbonate is selected from 4-fluoro-1,3-dioxolan-2-one; 4-fluoro-4-methyl-1,3-dioxolan-2-one; 4-fluoro-5-methyl-1,3-dioxolan-2-one; 4-fluoro-4,5-dimethyl-1,3-dioxolan-2-one; 4,5-difluoro-1,3-dioxolan-2-one; 4,5-difluoro-4-methyl-1,3-dioxolan-2-one; 4,5-difluoro-4,5-dimethyl-1,3-dioxolan-2-one; 4,4-difluoro-1,3-dioxolan-2-one; 4,4,5-trifluoro-1,3-dioxolan-2-one; 4,4,5,5-tetrafluoro-1,3-dioxolan-2-one; and mixtures thereof; being preferably 4-fluoro-1,3-dioxolan-2-one.

6. The liquid electrolyte lithium secondary battery cell according to anyone of Claims 1 to 5, wherein the fluorinated acyclic carboxylic acid ester is represented by the formula:
R¹-COO-R²
wherein
i) R¹ is H, an alkyl group, or a fluoroalkyl group;
ii) R² is an alkyl group, or a fluoroalkyl group;
iii) either or both of R¹ and R² comprises fluorine; and
iv) R¹ and R², taken as a pair, comprise at least two carbon atoms but not more than seven carbon atoms.

7. The liquid electrolyte lithium secondary battery cell according to anyone of Claims 1 to 6, wherein the fluorinated acyclic carboxylic acid ester is selected from the group consisting of 2,2-difluoroethyl acetate, 2,2,2-trifluoroethyl acetate, 2,2-difluoroethyl propionate, 3,3-difluoropropyl acetate, 3,3-difluoropropyl propionate, methyl 3,3-difluoropropanoate, ethyl 3,3-difluoropropanoate, ethyl 4,4-difluorobutanoate, difluoroethyl formate, trifluoroethyl formate, and mixtures thereof, preferably selected from the group consisting of 2,2-difluoroethyl acetate, 2,2-difluoroethyl propionate, 2,2,2-trifluoroethyl acetate, 2,2-difluoroethyl formate and mixtures thereof, being preferably 2,2-difluoroethyl acetate.

8. The liquid electrolyte lithium secondary battery cell according to anyone of Claims 1 to 7, wherein the electrolyte salt is a lithium salt, preferably selected from hexafluorophosphate (LiPF₆), lithium bis(trifluromethyl)tetrafluorophosphate (LiPF₄(CF₃)₂), lithium bis(pentafluoroethyl)tetrafluorophosphate (LiPF₄(C₂F₅)₂), lithium tris(pentafluoroethyl)trifluorophosphate (LiPF₃(C₂F₅)₃), lithium bis(trifluoromethanesulfonyl)imide (LiN(CF₃SO₂)₂), lithium bis(perfluoroethanesulfonyl)imide LiN(C₂F₅SO₂)₂, LiN(C₂F₅SO₃)₂, lithium (fluorosulfonyl) (nonafluorobutanesulfonyl)imide, lithium bis(fluorosulfonyl)imide, lithium tetrafluoroborate, lithium perchlorate, lithium hexafluoroarsenate, lithium hexafluoroantimonate, lithium tetrachloroaluminate, LiAlO4, lithium trifluoromethanesulfonate, lithium nonafluorobutanesulfonate, lithium tris(trifluoromethanesulfonyl)methide, lithium bis(oxalato)borate, lithium difluoro(oxalato)borate, Li₂B₁₂F₁₂₋ₓHₓ where x is an integer equal to 0 to 8, and mixtures of lithium fluoride and anion receptors such as B(OC₆F₅)₃, being more preferably selected from lithium hexafluorophosphate, lithium bis(fluorosulfonyl)imide or lithium bis(trifluoromethanesulfonyl)imide.

9. The liquid electrolyte lithium secondary battery cell according to anyone of Claims 1 to 8, wherein the electrolyte salt is present in the electrolyte composition in an amount ranging from 5% to 20%, preferably from 6% to 18%, more preferably from 8% to 17%, more preferably from 9% to 16%, even more preferably from 11% to 16%, by weight relative to the total weight of the electrolyte composition.

10. The liquid electrolyte lithium secondary battery cell according to anyone of Claims 1 to 9, wherein said lithium boron compound is selected from lithium tetrafluoroborate, lithium bis(oxalato)borate, lithium difluoro(oxalato)borate, Li₂B₁₂F₁₂₋ₓHₓ wherein x is an integer ranging from 0 to 8, being preferably lithium bis(oxalato)borate.

11. The liquid electrolyte lithium secondary battery cell according to anyone of Claims 1 to 10, wherein the cyclic sulfur compound is represented by the formula: 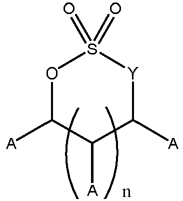 wherein Y is oxygen or denotes an HCA group; wherein each A is independently hydrogen or an optionally fluorinated ethenyl, allyl, ethynyl, propargyl, or C₁-C₃ alkyl group; and n is 0 or 1.

12. The liquid electrolyte lithium secondary battery cell according to anyone of Claims 1 to 10, wherein the cyclic sulfur compound is selected from 1,3,2-dioxathiolane-2,2-dioxide, 1,3,2-dioxathiolane-4-ethynyl-2,2-dioxide, 1,3,2-dioxathiolane-4-ethenyl-2,2-dioxide, 1,3,2-dioxathiolane-4,5-diethenyl-2,2-dioxide, 1,3,2-dioxathiolane-4-methyl-2,2-dioxide, 1,3,2-dioxathiolane-4,5-dimethyl-2,2-dioxide; 1,3,2-dioxathiane-2,2-dioxide, 1,3,2-dioxathiane-4-ethynyl-2,2-dioxide, 1,3,2-dioxathiane-5-ethynyl-2,2-dioxide, 1,3,2-dioxathiane-4-ethenyl-2,2-dioxide, 1,3,2-dioxathiane-5-ethenyl-2,2-dioxide, 1,3,2-dioxathiane-4,5-diethenyl-2,2-dioxide, 1,3,2-dioxathiane-4,6-diethenyl-2,2-dioxide, 1,3,2-dioxathiane-4,5,6-triethenyl-2,2-dioxide, 1,3,2-dioxathiane-4-methyl-2,2-dioxide, 1,3,2-dioxathiane-5-methyl-2,2-dioxide, 1,3,2-dioxathiane-4,5-dimethyl-2,2-dioxide, dioxathiane-4,6-dimethyl-2,2-dioxide, dioxathiane-4,5,6-trimethyl-2,2-dioxide; 1,3-propane sultone, 3-fluoro-1,3-propane sultone, 4-fluoro-1,3-propane sultone, 5-fluoro-1,3-propane sultone, 1,4-butane sultone, 3-fluoro-1,4-butane sultone, 4-fluoro-1,4-butane sultone, 5-fluoro-1,4-butane sultone, 6-fluoro-1,4-butane sultone and mixtures thereof; being preferably selected from 1,3,2-dioxathiolane-2,2-dioxide, 1,3,2-dioxathiane-2,2-dioxide and/or 1,3-propane sultone.

13. The liquid electrolyte lithium secondary battery cell according to anyone of Claims 1 to 12, wherein the cyclic carboxylic acid anhydride is present in the electrolyte composition in an amount ranging from 0.10% to 5%, wherein the cyclic carboxylic acid anhydride is represented by one of the formulas (IV) through (XI): 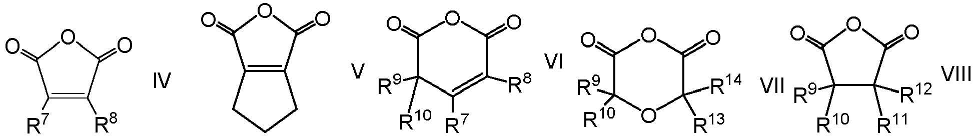 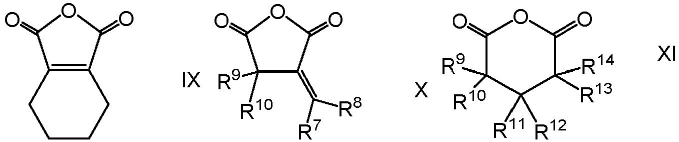 wherein R⁷ to R¹⁴ is each independently hydrogen, fluorine, a linear or branched C₁ to C₁₀ alkyl group optionally substituted with fluorine, alkoxy, and/or thioalkyl substituents, a linear or branched C₂ to C₁₀ alkenyl group, or a C₆ to C₁₀ aryl group.

14. The liquid electrolyte lithium secondary battery cell according to anyone of Claims 1 to 13, wherein the cyclic carboxylic acid anhydride is present in the electrolyte composition in an amount ranging from 0.10% to 5%, wherein the cyclic carboxylic acid anhydride is selected from maleic anhydride; succinic anhydride; glutaric anhydride; 2,3-dimethylmaleic anhydride; citraconic anhydride; 1-cyclopentene-1,2-dicarboxylic anhydride; 2,3-diphenylmaleic anhydride; 3,4,5,6-tetrahydrophthalic anhydride; 2,3-dihydro-1,4-dithiiono-[2,3-c] furan-5,7-dione; phenylmaleic anhydride; and mixtures thereof; being preferably maleic anhydride.

15. A device comprising the liquid electrolyte lithium secondary battery cell according to anyone of Claims 1 to 14.

## Patentansprüche

1. Lithiumsekundärbatteriezelle mit flüssigem Elektrolyt, umfassend:
- eine positive Elektrode, einschließlich eines pulverförmigen positiven Aktivmaterials, das durch die folgende chemische Formel dargestellt wird:
Li₁₋ₓ(Co_{1-a-b-c}NiₐMn_{b}M"_{c})₁₊ₓO₂
mit-0,01≤x≤0,01, 0,00≤a≤0,09, 0,01≤b≤0,05 und 0,00≤c≤0,03, wobei M" entweder eines oder mehrere Metalle der Gruppe ist, bestehend aus Al, Mg, Ti und Zr; und
- eine Elektrolytzusammensetzung, umfassend:
1) von zu 5,0 % bis 17,0 % ein nicht fluoriertes cyclisches Carbonat und von zu 0,5 % bis 10 % ein fluoriertes cyclisches Carbonat,
2) von zu 70,0 % bis 95,0 % einen fluorierten acyclischen Carbonsäureester,
3) mindestens ein Elektrolytsalz,
4) von zu 0,10 % bis 5,0 % eine Lithium-Bor-Verbindung,
5) von zu 0,20 % bis 10,0 % eine Cycloschwefelverbindung und
6) optional mindestens ein cyclisches Carbonsäureanhydrid,
wobei alle Prozentsätze als Gewichtsprozentsätze, bezogen auf das Gesamtgewicht der Elektrolytzusammensetzung, ausgedrückt sind.

2. Lithiumsekundärbatteriezelle mit flüssigem Elektrolyt nach Anspruch 1, wobei das nicht fluorierte cyclische Carbonat zu der Formel (I) oder (II) gehört, 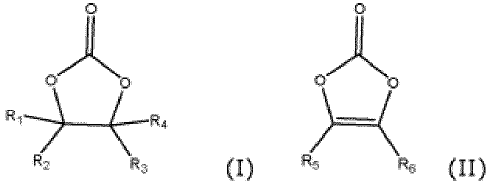 wobei R₁ bis R₆ unabhängig ausgewählt sind aus Wasserstoff, C₁ bis C₃-Alkyl-, C₂ bis C₃-Alkenyl- oder C₂ bis C₃-Alkinylgruppen.

3. Lithiumsekundärbatteriezelle mit flüssigem Elektrolyt nach Anspruch 2, wobei das nicht fluorierte cyclische Carbonat ausgewählt ist aus Ethylencarbonat, Propylencarbonat, Vinylencarbonat, Ethyl-Propyl-Vinylencarbonat, Vinylethylencarbonat, Dimethylvinylencarbonat und Mischungen davon, wobei es vorzugsweise Propylencarbonat ist.

4. Lithiumsekundärbatteriezelle mit flüssigem Elektrolyt nach einem der Ansprüche 1 bis 3, wobei das nicht fluorierte cyclische Carbonat zu der Formel (I) oder (II) gehört, 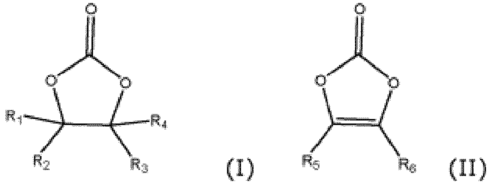 wobei mindestens eines von R₁ bis R₆ Fluor oder eine C₁ bis C₃-Fluoroalkyl-, C₂ bis C₃-Fluoroalkenyl-, C₂ bis C₃-Fluoroalkinylgruppe ist.

5. Lithiumsekundärbatteriezelle mit flüssigem Elektrolyt nach Anspruch 4, wobei das fluorierte cyclische Carbonat ausgewählt ist aus 4-Fluor-1,3-dioxolan-2-on; 4-Fluor-4-methyl-1,3-dioxolan-2-on; 4-Fluor-5-methyl-1,3-dioxolan-2-on; 4-Fluor-4,5-dimethyl-1,3-dioxolan-2-on; 4,5-Difluor-1,3-dioxolan-2-on; 4,5-Difluor-4-methyl-1,3-dioxolan-2-on; 4,5-Difluor-4,5-dimethyl-1,3-dioxolan-2-on; 4,4-Difluor-1,3-dioxolan-2-on; 4,4,5-Trifluor-1,3-dioxolan-2-on; 4,4,5,5-Tetrafluor-1,3-dioxolan-2-on; und Mischungen davon; wobei es vorzugsweise 4-Fluor-1,3-dioxolan-2-on ist.

6. Lithiumsekundärbatteriezelle mit flüssigem Elektrolyt nach einem der Ansprüche 1 bis 5, wobei der fluorierte acyclische Carbonsäureester durch die Formel dargestellt wird:
R¹-COO-R²
wobei
i) R¹ H, eine Alkylgruppe oder eine Fluoroalkylgruppe ist;
ii) R² eine Alkylgruppe oder eine Fluoroalkylgruppe ist;
iii) eins oder sowohl R¹ als auch R² Fluor umfassen; und
iv) R¹ und R², als Paar betrachtet, mindestens zwei Kohlenstoffatome, aber nicht mehr als sieben Kohlenstoffatome umfassen.

7. Lithiumsekundärbatteriezelle mit flüssigem Elektrolyt nach einem der Ansprüche 1 bis 6, wobei der fluorierte acyclische Carbonsäureester aus der Gruppe ausgewählt ist, bestehend aus 2,2-Difluorethylacetat, 2,2,2-Trifluorethylacetat, 2,2-Difluorethylpropionat, 3,3-Difluorpropylacetat, 3,3-Difluorpropylpropionat, Methyl-3,3-difluorpropanoat, Ethyl-3,3-difluorpropanoat, Ethyl-4,4-difluorbutanoat, Difluorethylformiat, Trifluorethylformiat und Mischungen davon, vorzugsweise aus der Gruppe ausgewählt ist, bestehend aus 2,2-Difluorethylacetat, 2,2-Difluorethylpropionat, 2,2,2-Trifluorethylacetat, 2,2-Difluorethylformiat und Mischungen davon, wobei er vorzugsweise 2,2-Difluorethylacetat ist.

8. Lithiumsekundärbatteriezelle mit flüssigem Elektrolyt nach einem der Ansprüche 1 bis 7, wobei das Elektrolytsalz ein Lithiumsalz ist, vorzugsweise ausgewählt aus Hexafluorophosphat (LiPF₆), Lithiumbis(trifluoromethyl)tetrafluorophosphat (LiPF₄(CF₃)₂), Lithiumbis(pentafluoroethyl)tetrafluorophosphat (LiPF₄(C₂F₅)₂), Lithiumtris(pentafluoroethyl)trifluorophosphat (LiPF₃(C₂F₅)₃), Lithiumbis(trifluoromethansulfonyl)imid (LiN(CF₃SO₂)₂), Lithiumbis(perfluoroethansulfonyl)imid LiN(C₂F₅SO₂)₂, LiN(C₂F₅SO₃)₂, Lithium(fluorosulfonyl)(nonafluorobutansulfonyl)imid, Lithiumbis(fluorosulfonyl)imid, Lithiumtetrafluoroborat, Lithiumperchlorat, Lithiumhexafluoroarsenat, Lithiumhexafluoroantimonat, Lithiumtetrachloraluminat, LiAlO4, Lithiumtrifluoromethansulfonat, Lithiumnonafluorobutansulfonat, Lithiumtris(trifluoromethansulfonyl)methid, Lithiumbis(oxalato)borat, Lithiumdifluoro(oxalato)borat, Li₂B₁₂F₁₂₋ₓHₓ, wobei x eine ganze Zahl gleich 0 bis 8 ist, und Mischungen von Lithiumfluorid und Anionenrezeptoren wie B(OC₆F₅)₃, mehr bevorzugt ausgewählt aus Lithiumhexafluorophosphat, Lithiumbis(fluorosulfonyl)imid oder Lithiumbis(trifluoromethansulfonyl)imid.

9. Lithiumsekundärbatteriezelle mit flüssigem Elektrolyt nach einem der Ansprüche 1 bis 8, wobei das Elektrolytsalz in der Elektrolytzusammensetzung in einer Menge im Bereich von 5 Gew.-% bis 20 Gew.-%, vorzugsweise von 6 Gew.-% bis 18 Gew.-%, mehr bevorzugt von 8 Gew.-% bis 17 Gew.-%, mehr bevorzugt von 9 Gew.-% bis 16 Gew.-%, noch mehr bevorzugt von 11 Gew.-% bis 16 Gew.-%, bezogen auf des Gesamtgewicht der Elektrolytzusammensetzung, vorhanden ist.

10. Lithiumsekundärbatteriezelle mit flüssigem Elektrolyt nach einem der Ansprüche 1 bis 9, wobei die Lithium-Bor-Verbindung ausgewählt ist aus Lithiumtetrafluoroborat, Lithiumbis(oxalato)borat, Lithiumdifluoro(oxalato)borat, Li₂B₁₂F₁₂₋ₓH_{X}, wobei x eine ganze Zahl im Bereich von 0 bis 8 ist, wobei sie vorzugsweise Lithiumbis(oxalato)borat ist.

11. Lithiumsekundärbatteriezelle mit flüssigem Elektrolyt nach einem der Ansprüche 1 bis 10, wobei die Cycloschwefelverbindung durch die Formel dargestellt wird: 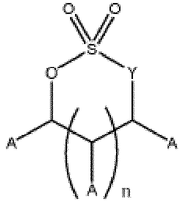 wobei Y Sauerstoff ist oder eine HCA-Gruppe bezeichnet; wobei jedes A unabhängig Wasserstoff oder ein optional fluoriertes Ethenyl, Allyl, Ethinyl, Propargyl oder eine C₁-C₃-Alkylgruppe ist; und n 0 oder 1 ist.

12. Lithiumsekundärbatteriezelle mit flüssigem Elektrolyt nach einem der Ansprüche 1 bis 10, wobei die Cycloschwefelverbindung ausgewählt ist aus 1,3,2-Dioxathiolan-2,2-dioxid, 1,3,2-Dioxathiolan-4-ethinyl-2,2-dioxid, 1,3,2-Dioxathiolan-4-ethenyl-2,2-dioxid, 1,3,2-Dioxathiolan-4,5-diethenyl-2,2-dioxid, 1,3,2-Dioxathiolan-4-methyl-2,2-dioxid, 1,3,2-Dioxathiolan-4,5-dimethyl-2,2-dioxid; 1,3,2-Dioxathian-2,2-dioxid, 1,3,2-Dioxathian-4-ethinyl-2,2-dioxid, 1,3,2-Dioxathian-5-ethinyl-2,2-dioxid, 1,3,2-Dioxathian-4-ethenyl-2,2-dioxid, 1,3,2-Dioxathian-5-ethenyl-2,2-dioxid, 1,3,2-Dioxathian-4,5-diethenyl-2,2-dioxid, 1,3,2-Dioxathian-4,6-diethenyl-2,2-dioxid, 1,3,2-Dioxathian-4,5,6-triethenyl-2,2-dioxid, 1,3,2-Dioxathian-4-methyl-2,2-dioxid, 1,3,2-Dioxathian-5-methyl-2,2-dioxid, 1,3,2-Dioxathian-4,5-dimethyl-2,2-dioxid, Dioxathian-4,6-dimethyl-2,2-dioxid, Dioxathian-4,5,6-trimethyl-2,2-dioxid; 1,3-Propansulton, 3-Fluor-1,3-propansulton, 4-Fluor-1,3-propansulton, 5-Fluor-1,3-propansulton, 1,4-Butansulton, 3-Fluor-1,4-butansulton, 4-Fluor-1,4-butansulton, 5-Fluor-1,4-butansulton, 6-Fluor-1,4-butansulton und Mischungen davon; wobei sie vorzugsweise ausgewählt ist aus 1,3,2-Dioxathiolan-2,2-dioxid, 1,3,2-Dioxathian-2,2-dioxid und/oder 1,3-Propansulton.

13. Lithiumsekundärbatteriezelle mit flüssigem Elektrolyt nach einem der Ansprüche 1 bis 12, wobei das cyclische Carbonsäureanhydrid in der Elektrolytzusammensetzung in einer Menge im Bereich von 0,10 % bis 5 % vorhanden ist, wobei das cyclische Carbonsäureanhydrid durch eine der Formeln (IV) bis einschließlich (XI) dargestellt wird: 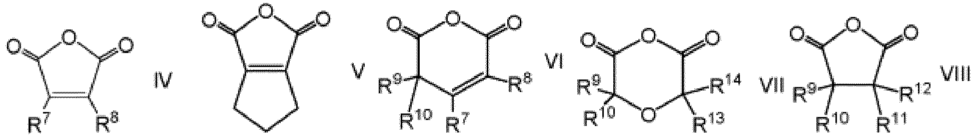 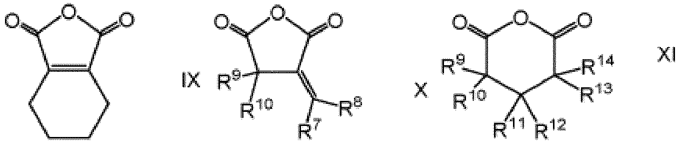 wobei R⁷bis R¹⁴ jeweils unabhängig Wasserstoff, Fluor, eine lineare oder verzweigte C₁- bis C₁₀-Alkylgruppe, optional substituiert mit Fluor, Alkoxy und/oder Thioalkylsubstituenten, einer linearen oder verzweigten C₂- bis C₁₀-Alkenylgruppe oder einer C₆- bis C₁₀-Arylgruppe ist.

14. Lithiumsekundärbatteriezelle mit flüssigem Elektrolyt nach einem der Ansprüche 1 bis 13, wobei das cyclische Carbonsäureanhydrid in der Elektrolytzusammensetzung in einer Menge im Bereich von 0,10 % bis 5 % vorhanden ist, wobei das cyclische Carbonsäureanhydrid ausgewählt ist aus Maleinsäureanhydrid; Bernsteinsäureanhydrid; Glutarsäureanhydrid; 2,3-Dimethylmaleinsäureanhydrid; Citraconsäureanhydrid; 1-Cyclopenten-1,2-dicarbonsäureanhydrid; 2,3-Diphenylmaleinsäureanhydrid; 3,4,5,6-Tetrahydrophthalsäureanhydrid; 2,3-Dihydro-1,4-dithiiono-[2,3-c]furan-5,7-dion; Phenylmaleinsäureanhydrid; und Mischungen davon; wobei es vorzugsweise Maleinsäureanhydrid ist.

15. Vorrichtung, umfassend die Lithiumsekundärbatteriezelle mit flüssigem Elektrolyt nach einem der Ansprüche 1 bis 14.

## Revendications

1. Cellule de batterie secondaire au lithium à électrolyte liquide comprenant :
- une électrode positive comportant un matériau actif positif pulvérulent représenté par la formule chimique suivante :
Li₁₋ₓ(Co_{1-a-b-c}NiₐMn_{b}M"_{c})₁₊ₓO₂
avec -0,01≤x≤0,01, 0,00≤a≤0,09, 0,01≤b≤0,05, et 0,00≤c≤0,03, dans laquelle M" est soit un soit plusieurs métaux du groupe constitué par Al, Mg, Ti et Zr ; et
- une composition d'électrolyte comprenant :
1) de 5,0 % à 17,0 % d'un carbonate cyclique non fluoré, et de 0,5 % à 10 % d'un carbonate cyclique fluoré,
2) de 70,0 % à 95,0 % d'un ester d'acide carboxylique acyclique fluoré,
3) au moins un sel électrolyte,
4) de 0,10 % à 5,0 % d'un composé de lithium-bore,
5) de 0,20 % à 10,0 % d'un composé de soufre cyclique, et
6) facultativement au moins un anhydride d'acide carboxylique cyclique,
tous les pourcentages étant exprimés en poids par rapport au poids total de la composition d'électrolyte.

2. Cellule de batterie secondaire au lithium à électrolyte liquide selon la revendication 1, dans laquelle le carbonate cyclique non fluoré est de formule (I) ou (II) 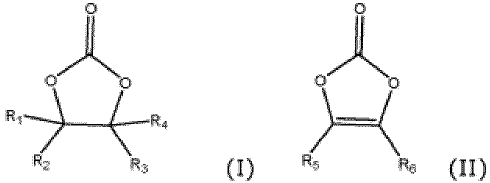 dans laquelle R₁ à R₆ sont indépendamment choisis parmi hydrogène, des groupes alkyle en C₁ à C₃, alcényle en C₂ à C₃ ou alcynyle en C₂ à C₃.

3. Cellule de batterie secondaire au lithium à électrolyte liquide selon la revendication 2, dans laquelle le carbonate cyclique non fluoré est choisi parmi carbonate d'éthylène, carbonate de propylène, carbonate de vinylène, carbonate d'éthyl-propyl-vinylène, carbonate de vinyl-éthylène, carbonate de diméthylvinylène, et mélanges de ceux-ci, étant de préférence carbonate de propylène.

4. Cellule de batterie secondaire au lithium à électrolyte liquide selon l'une quelconque des revendications 1 à 3, dans laquelle le carbonate cyclique fluoré est de formule (I) ou (II) 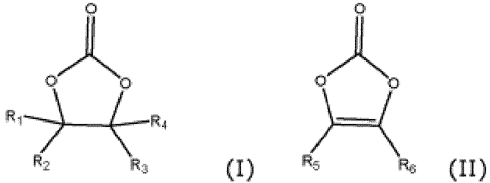 dans laquelle au moins l'un parmi R₁ à R₆ est fluor ou un groupe fluoroalkyle en C₁ à C₃, fluoroalcényle en C₂ à C₃, fluoroalcynyle en C₂ à C₃.

5. Cellule de batterie secondaire au lithium à électrolyte liquide selon la revendication 4, dans laquelle le carbonate cyclique fluoré est choisi parmi 4-fluoro-1,3-dioxolan-2-one ; 4-fluoro-4-méthyl-1,3-dioxolan-2-one ; 4-fluoro-5-méthyl-1,3-dioxolan-2-one ; 4-fluoro-4,5-diméthyl-1,3-dioxolan-2-one ; 4,5-difluoro-1,3-dioxolan-2-one ; 4,5-difluoro-4-méthyl-1,3-dioxolan-2-one ; 4,5-difluoro-4,5-diméthyl-1,3-dioxolane-2-one ; 4,4-difluoro-1,3-dioxolane-2-one ; 4,4,5-trifluoro-1,3-dioxolan-2-one ; 4,4,5,5-tétrafluoro-1,3-dioxolan-2-one ; et mélanges de celles-ci ; étant de préférence 4-fluoro-1,3-dioxolan-2-one.

6. Cellule de batterie secondaire au lithium à électrolyte liquide selon l'une quelconque des revendications 1 à 5, dans laquelle l'ester d'acide carboxylique acyclique fluoré est représenté par la formule :
R¹-COO-R²
dans laquelle
i) R¹ est H, un groupe alkyle, ou un groupe fluoroalkyle ;
ii) R² est un groupe alkyle, ou un groupe fluoroalkyle ;
iii) l'un ou/et l'autre parmi R¹ et R² comprennent du fluor ; et
iv) R¹ et R², pris en tant que paire, comprennent au moins deux atomes de carbone mais pas plus de sept atomes de carbone.

7. Cellule de batterie secondaire au lithium à électrolyte liquide selon l'une quelconque des revendications 1 à 6, dans laquelle l'ester d'acide carboxylique acyclique fluoré est choisi dans le groupe constitué par acétate de 2,2-difluoroéthyle, acétate de 2,2,2-trifluoroéthyle, propionate de 2,2-difluoroéthyle, acétate de 3,3-difluoropropyle, propionate de 3,3-difluoropropyle, 3,3-difluoropropanoate de méthyle, 3,3-difluoropropanoate d'éthyle, 4,4-difluorobutanoate d'éthyle, formiate de difluoroéthyle, formiate de trifluoroéthyle, et mélanges de ceux-ci, choisi de préférence dans le groupe constitué par acétate de 2,2-difluoroéthyle, propionate de 2,2-difluoroéthyle, acétate de 2,2,2-trifluoroéthyle, formiate de 2,2-difluoroéthyle et mélanges de ceux-ci, étant de préférence acétate de 2,2-difluoroéthyle.

8. Cellule de batterie secondaire au lithium à électrolyte liquide selon l'une quelconque des revendications 1 à 7, dans laquelle le sel électrolyte est un sel de lithium, choisi de préférence parmi hexafluorophosphate (LiPF₆), bis(triflurométhyl)tétrafluorophosphate de lithium (LiPF₄(CF₃)₂), bis(pentafluoroéthyl)tétrafluorophosphate de lithium (LiPF₄(C₂F₅)₂), tris(pentafluoroéthyl)trifluorophosphate de lithium (LiPF₃(C₂F₅)₃), bis(trifluorométhanesulfonyl)imide de lithium (LiN(CF₃SO₂)₂), bis(perfluoroéthanesulfonyle)imide de lithium LiN(C₂F₅SO₂)₂, LiN(C₂F₅SO₃)₂, (fluorosulfonyl)-(nonafluorobutanesulfonyl)imide de lithium, bis(fluorosulfonyl)imide de lithium, tétrafluoroborate de lithium, perchlorate de lithium, hexafluoroarsénate de lithium, hexafluoroantimonate de lithium, tétrachloroaluminate de lithium, LiAlO4, trifluorométhanesulfonate de lithium, nonafluorobutanesulfonate de lithium, tris(trifluorométhanesulfonyl)méthide de lithium, bis(oxalato)borate de lithium, difluoro(oxalato)borate de lithium, Li₂B₁₂F₁₂₋ₓHₓ où x est un nombre entier égal à 0 à 8, et mélanges de fluorure de lithium et de récepteurs d'anion tels que B(OC₆F₅)₃, étant plus préférablement choisi parmi hexafluorophosphate de lithium, bis(fluorosulfonyl)imide de lithium ou bis(trifluorométhanesulfonyl)imide de lithium.

9. Cellule de batterie secondaire au lithium à électrolyte liquide selon l'une quelconque des revendications 1 à 8, dans laquelle le sel électrolyte est présent dans la composition d'électrolyte en une quantité allant de 5 % à 20 %, de préférence de 6 % à 18 %, plus préférablement de 8 % à 17 %, plus préférablement de 9 % à 16 %, même plus préférablement de 11 % à 16 %, en poids par rapport au poids total de la composition d'électrolyte.

10. Cellule de batterie secondaire au lithium à électrolyte liquide selon l'une quelconque des revendications 1 à 9, dans laquelle ledit composé de lithium-bore est choisi parmi tétrafluoroborate de lithium, bis(oxalato)borate de lithium, difluoro(oxalato)borate de lithium, Li₂B₁₂F₁₂₋ₓHₓ dans laquelle x est un nombre entier allant de 0 à 8, étant de préférence bis(oxalato)borate de lithium.

11. Cellule de batterie secondaire au lithium à électrolyte liquide selon l'une quelconque des revendications 1 à 10, dans laquelle le composé de soufre cyclique est représenté par la formule : 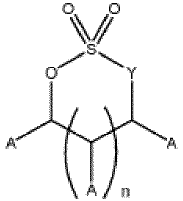 dans laquelle Y est oxygène ou désigne un groupe HCA ; dans laquelle chaque A est indépendamment hydrogène ou un groupe éthényle, allyle, éthynyle, propargyle, ou alkyle en C₁ à C₃ facultativement fluoré ; et n vaut 0 ou 1.

12. Cellule de batterie secondaire au lithium à électrolyte liquide selon l'une quelconque des revendications 1 à 10, dans laquelle le composé de soufre cyclique est choisi parmi 1,3,2-dioxathiolane-2,2-dioxyde, 1,3,2-dioxathiolane-4-éthynyl-2,2-dioxyde, 1,3,2-dioxathiolane-4-éthényl-2,2-dioxyde, 1,3,2-dioxathiolane-4,5-diéthényl-2,2-dioxyde, 1,3,2-dioxathiolane-4-méthyl-2,2-dioxyde, 1,3,2-dioxathiolane-4,5-diméthyle-2,2-dioxyde ; 1,3,2-dioxathiane-2,2-dioxyde, 1,3,2-dioxathiane-4-éthynyl-2,2-dioxyde, 1,3,2-dioxathiane-5-éthynyl-2,2-dioxyde, 1,3,2-dioxathiane-4-éthényl-2,2-dioxyde, 1,3,2-dioxathiane-5-éthényle-2,2-dioxyde, 1,3,2-dioxathiane-4,5-diéthényl-2,2-dioxyde, 1,3,2-dioxathiane-4,6-diéthényl-2,2-dioxyde, 1,3,2-dioxathiane-4,5,6-triéthényl-2,2-dioxyde, 1,3,2-dioxathiane-4-méthyl-2,2-dioxyde, 1,3,2-dioxathiane-5-méthyl-2,2-dioxyde, 1,3,2-dioxathiane-4,5-diméthyl-2,2-dioxyde, dioxathiane-4,6-diméthyl-2,2-dioxyde, dioxathiane-4,5,6-triméthyl-2,2-dioxyde ; sultone de 1,3-propane, sultone de 3-fluoro-1,3-propane, sultone de 4-fluoro-1,3-propane, sultone de 5-fluoro-1,3-propane, sultone de 1,4-butane, sultone de 3-fluoro-1,4-butane, sultone de 4-fluoro-1,4-butane, sultone de 5-fluoro-1,4-butane, sultone de 6-fluoro-1,4-butane et mélanges de ceux-ci ; étant choisi de préférence parmi 1,3,2-dioxathiolane-2,2-dioxyde, 1,3,2-dioxathiane-2,2-dioxyde et/ou sultone de 1,3-propane.

13. Cellule de batterie secondaire au lithium à électrolyte liquide selon l'une quelconque des revendications 1 à 12, dans laquelle l'anhydride d'acide carboxylique cyclique est présent dans la composition d'électrolyte en une quantité allant de 0,10 % à 5 %, dans laquelle l'anhydride d'acide carboxylique cyclique est représenté par l'une des formules (IV) à (XI) : 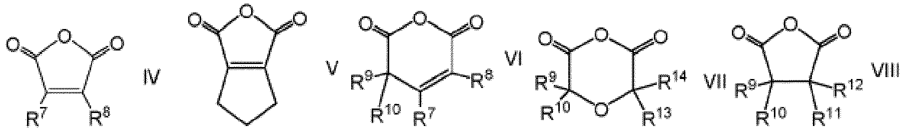 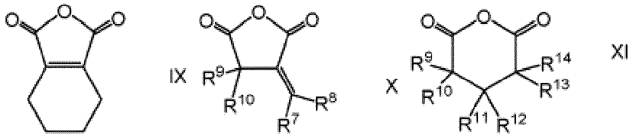 dans laquelle R⁷ à R¹⁴ sont chacun indépendamment hydrogène, fluor, un groupe alkyle en C₁ à C₁₀ linéaire ou ramifié facultativement substitué par des substituants fluor, alcoxy et/ou thioalkyle, un groupe alcényle en C₂ à C₁₀ linéaire ou ramifié, ou un groupe aryle en C₆ à C₁₀.

14. Cellule de batterie secondaire au lithium à électrolyte liquide selon l'une quelconque des revendications 1 à 13, dans laquelle l'anhydride d'acide carboxylique cyclique est présent dans la composition d'électrolyte en une quantité allant de 0,10 % à 5 %, dans laquelle l'anhydride d'acide carboxylique cyclique est choisi parmi anhydride maléique ; anhydride succinique ; anhydride glutarique ; anhydride 2,3-diméthylmaléique ; anhydride citraconique ; anhydride 1-cyclopentène-1,2-dicarboxylique ; anhydride 2,3-diphénylmaléique ; anhydride 3,4,5,6-tétrahydrophtalique ; 2,3-dihydro-1,4-dithiiono-[2,3-c] furan-5,7-dione ; anhydride phénylmaléique ; et mélanges de ceux-ci ; étant de préférence anhydride maléique.

15. Dispositif comprenant la cellule de batterie secondaire au lithium à électrolyte liquide selon l'une quelconque des revendications 1 à 14.
